# EUROPEAN PATENT APPLICATION

(11) **EP 4 595 732 A1**
(43) Date of publication of application: **06.08.2025**
(21) Application number: 25151214.1
(22) Date of filing: 10.01.2025
(51) Int. Cl.: A01B 69/04

(54) **METHOD FOR CONTROLLING WORK VEHICLE, WORK VEHICLE CONTROL PROGRAM, WORK VEHICLE CONTROL SYSTEM, AND WORK VEHICLE**

(30) Priority: 31.01.2024 JP 2024012393
(71) Applicant: Yanmar Holdings Co., Ltd., Osaka-shi, Osaka (JP)
(72) Inventor: OTA, Kohei, Osaka-shi (JP); KANO, Tomohisa, Osaka-shi (JP); HOMMA, Terasu, Osaka-shi (JP)
(74) Representative: Sekiguchi, Kazuya

(57) **Abstract**

[Problem] To provide a method for controlling a work vehicle, a work vehicle control program, a work vehicle control system, and a work vehicle that easily performs more appropriate work.

[Solution] A method for controlling a work vehicle 1 is a method for controlling the work vehicle to which a work machine 400 is detachably attached and includes causing the work vehicle 1 to autonomously travel along a target route and changing a setting item related to autonomous travel of the work vehicle 1 in accordance with a state of the work machine 400 attached to the work vehicle 1.

## Description

### TECHNICAL FIELD

The present invention relates to a method for controlling a work vehicle, a work vehicle control program, a work vehicle control system, and a work vehicle that performs work with a work machine.

### BACKGROUND ART

As a related art, there is a disclosed work vehicle control system (autonomous traveling system) that causes a work vehicle to autonomously travel along a target route in a work site (for example, see Patent Document 1). In the work vehicle control system according to the related art, the work vehicle autonomously travels in a predetermined row order while performing predetermined work on work objects arranged in a plurality of rows in the work site. The work vehicle performs, as the predetermined work, spreading work to spread a spread material such as a medicinal solution or water to a work object planted in a field (work site).

According to the related art, the obstacle detection device mounted on the work vehicle includes a lidar sensor provided on the front left side of the machine body (vehicle body) of the work vehicle and a lidar sensor provided on the front right side of the machine body. The work vehicle control system executes avoidance processing to avoid an obstacle when there is a possibility that the work vehicle collides with the obstacle based on the measurement information about the obstacle acquired from the obstacle detection device.

### PRIOR ART DOCUMENT

### PATENT DOCUMENT

Patent Document 1: Japanese Unexamined Patent Publication No. 2022-183962

### SUMMARY OF INVENTION

### TECHNICAL PROBLEM

In the above-described related art, when the work machine attached to the work vehicle is replaced with another work machine, various adjustments and the like corresponding to the replaced work machine are required, but for example there is a possibility that an operator performs work without noticing that the work machine has been replaced. In this case, it is sometimes difficult for the work vehicle to perform the appropriate work.

An object of the present invention is to provide a method for controlling a work vehicle, a work vehicle control program, a work vehicle control system, and a work vehicle that easily performs more appropriate work.

### SOLUTION TO PROBLEM

A method for controlling a work vehicle according to one aspect of the present invention is a method for controlling a work vehicle to which a work machine is detachably attached, and the method includes causing the work vehicle to autonomously travel along a target route, and changing a setting item related to autonomous travel of the work vehicle in accordance with a state of the work machine attached to the work vehicle.

A work vehicle control program according to one aspect of the present invention is a work vehicle control program causing one or more processors to execute the method for controlling the work vehicle.

A work vehicle control system according to one aspect of the present invention is used for controlling a work vehicle to which a work machine is detachably attached and includes a traveling processing unit and a change processing unit. The traveling processing unit causes the work vehicle to autonomously travel along a target route. The change processing unit changes a setting item related to autonomous travel of the work vehicle in accordance with a state of the work machine attached to the work vehicle.

A work vehicle according to one aspect of the present invention includes the work vehicle control system and a machine body to which the work machine is detachably attached.

### ADVANTAGEOUS EFFECTS OF INVENTION

According to the present invention, it is possible to provide a method for controlling a work vehicle, a work vehicle control program, a work vehicle control system, and a work vehicle that easily performs more appropriate work.

### BRIEF DESCRIPTION OF DRAWINGS

FIG. 1 is an external view of a work vehicle according to a first embodiment as viewed from the left front side.
FIG. 2 is an external view of a rear surface of the work vehicle according to the first embodiment as viewed from the rear surface side.
FIG. 3 is a diagram illustrating an example of a crop row in which the work vehicle according to the first embodiment is used.
FIG. 4 is a schematic view illustrating an overall configuration of an automatic work system using the work vehicle according to the first embodiment.
FIG. 5 is a schematic block diagram illustrating a main configuration of the automatic work system according to the first embodiment.
FIG. 6 is an external view of a left side surface of the work vehicle according to the first embodiment as viewed from the left side.
FIG. 7 is an external view of a right side surface of the work vehicle according to the first embodiment as viewed from the right side.
FIG. 8 is an external view of an upper surface of the work vehicle according to the first embodiment as viewed from above.
FIG. 9 is an external view of a rear surface of the work vehicle according to the first embodiment as viewed from the rear side.
FIG. 10 is a schematic view illustrating a state of the work vehicle according to the first embodiment as viewed obliquely from the rear.
FIG. 11 is an external view of a right side surface of the work vehicle according to the first embodiment in a state where a weeder in an extended posture is attached to the work vehicle as viewed from the right side.
FIG. 12 is an external view of an upper surface of the work vehicle according to the first embodiment in a state where the weeder in the extended posture is attached to the work vehicle as viewed from above.
FIG. 13 is an external view of a right side surface of the work vehicle according to the first embodiment in a state where the weeder in a retracted posture is attached to the work vehicle as viewed from the right side.
FIG. 14 is an external view of an upper surface of the work vehicle according to the first embodiment in a state where the weeder in the retracted posture is attached to the work vehicle as viewed from above.
FIG. 15 is a schematic view illustrating an action of autonomous travel of the work vehicle according to the first embodiment.
FIG. 16 is a schematic view illustrating a display example of a start screen used in the work vehicle according to the first embodiment.
FIG. 17 is a schematic view illustrating a display example of a start screen used in the work vehicle according to the first embodiment.
FIG. 18 is a schematic view illustrating a display example of a sensor check screen used in the work vehicle according to the first embodiment.
FIG. 19 is a schematic view illustrating a display example of a preparation screen used in the work vehicle according to the first embodiment.
FIG. 20 is a schematic view illustrating a display example of a selection screen and a selection confirmation screen used in the work vehicle according to the first embodiment.
FIG. 21 is a schematic view illustrating a display example of a selection screen and a selection confirmation screen used in the work vehicle according to the first embodiment.
FIG. 22 is a schematic view illustrating a display example of a preparation screen used in the work vehicle according to the first embodiment.
FIG. 23 is a schematic view illustrating a display example of a status screen used in the work vehicle according to the first embodiment.
FIG. 24 is a schematic view illustrating an automatic stop position of the work vehicle according to the first embodiment.
FIG. 25 is a schematic view illustrating an obstacle determination range of the work vehicle according to the first embodiment.
FIG. 26 is a schematic view illustrating a lifting and lowering action of the weeder when the work vehicle according to the first embodiment moves from a work area to a non-work area.
FIG. 27 is a schematic view illustrating a lifting and lowering action of the weeder when the work vehicle according to the first embodiment moves from a non-work area to a work area.

### DESCRIPTION OF EMBODIMENTS

Embodiments of the present invention will be described below with reference to the accompanying drawings. The following embodiments are examples embodying the present invention and are not intended to limit the technical scope of the present invention.

### (First Embodiment)

### [1] Overall Configuration

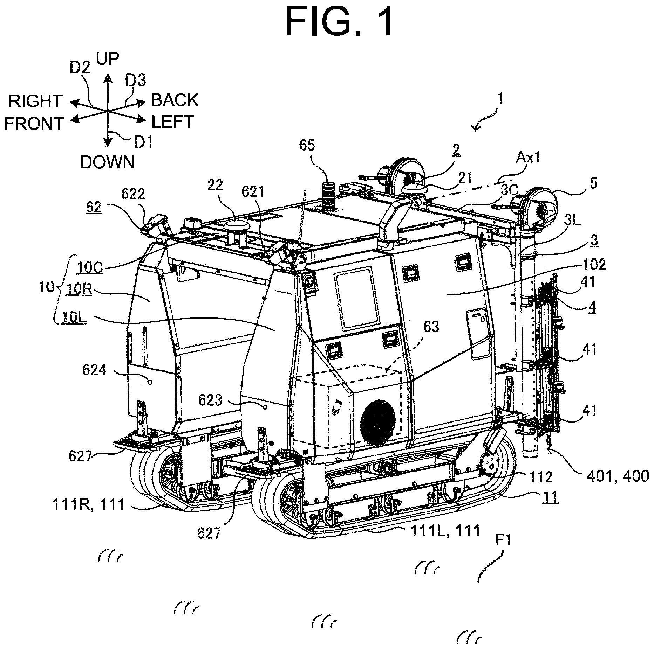

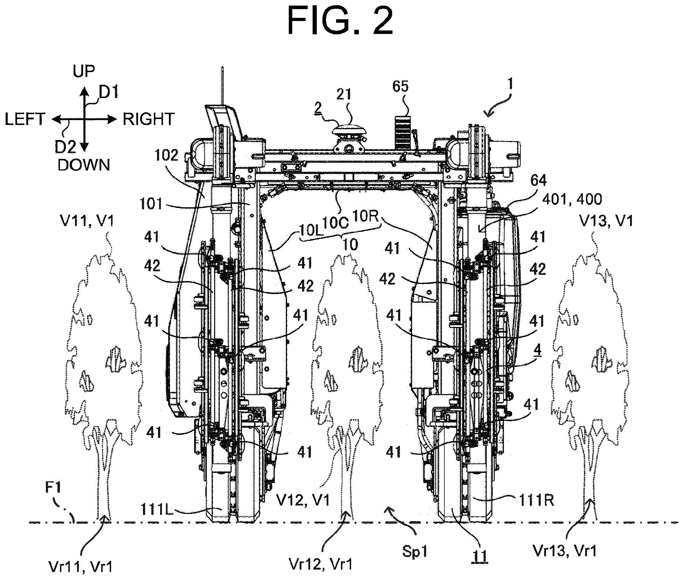

First, an overall configuration of a work vehicle 1 according to the present embodiment will be described with reference to FIGS. 1 to 5. According to the present embodiment, the work vehicle 1 performs for example spreading work to spread a spread material such as medicinal solution, water, or fertilizer to a crop V1 (see FIG. 2) grown in a field F1, or weeding work to remove weeds around the crop V1. The work vehicle 1 performs various types of work while autonomously traveling along a target route in a work site such as the field F1.

That is, the work vehicle 1 is configured to be able to perform spreading work or weeding work as work. A work machine 400 is attachable to and detachable from (a machine body 10 of) the work vehicle 1, and the work executable by the work vehicle 1 varies depending on the type of the work machine 400 attached to the work vehicle 1. In other words, the work machine 400 corresponding to the work executed by the work vehicle 1 is attached to (the machine body 10 of) the work vehicle 1.

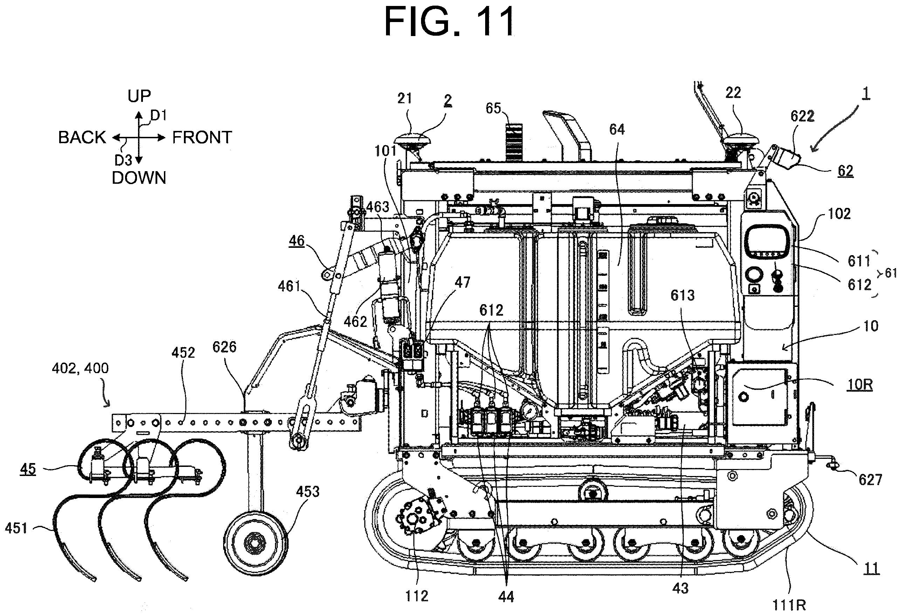

According to the present embodiment, the work machine 400 attachable to the work vehicle 1 includes at least two types of the work machines 400, that is, a spreader 401 and a weeder 402 (see FIG. 11). In a state where the spreader 401 is attached as the work machine 400 to the machine body 10, the work vehicle 1 can execute the spreading work. On the other hand, in a state where the weeder 402 is attached as the work machine 400 to the machine body 10, the work vehicle 1 can execute the weeding work.

The "work vehicle" described in the present disclosure includes work vehicles such as a tractor, a rice transplanter, a sprayer, a seeder, a transplanter, and a combine, which perform various types of work, in addition to work vehicles that perform spreading work or weeding work. Furthermore, the "work vehicle" described in the present disclosure is not limited to agricultural machines (farm machines) and may be, for example, construction machines (building machines).

In addition, the "field" described in the present disclosure is an example of a work site where the work vehicle 1 performs various types of work such as spreading work while moving and includes orchards, pastures, rice fields, crop fields, and the like, where agricultural products are grown. In this case, the crop V1 grown in the field F1 is an agricultural product. Further, in a case where a plant is grown in a planting field, the planting field is the field F1, and in a case where a tree for wood is grown in a forest as in forestry, the forest is the field F1. In this case, the crop V1 grown in the field F1 is a plant, tree, or the like. However, the work site where the work vehicle 1 performs work is not limited to the field F1, and may be other than the field F1. For example, when the work vehicle 1 is a construction machine, the site where the construction machine performs work is a work site.

According to the present embodiment, as an example, it is assumed that the work vehicle 1 performs work on the crop V1 grown in the field F1 while moving in the field F1 which is an orchard such as a grape orchard or an apple orchard. The crop V1 is an example of a work object on which the work vehicle 1 performs the work such as the spreading work and is, for example, a grape tree.

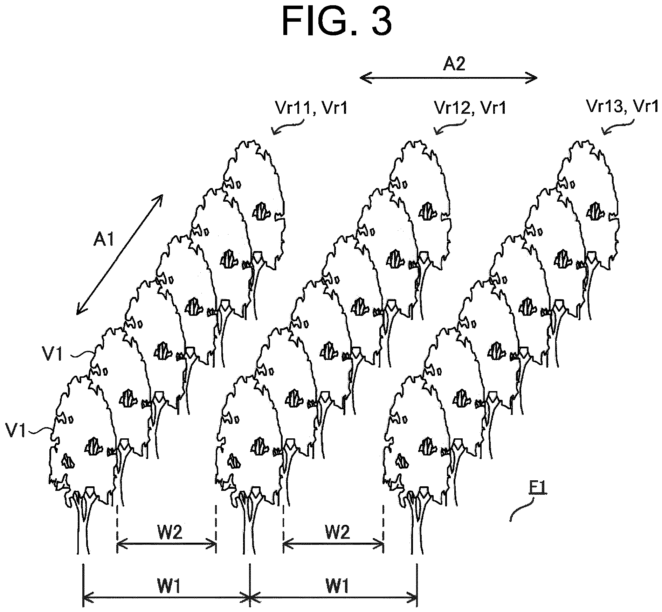

The crops V1 are arranged in a plurality of rows at predetermined intervals in the field F1. Specifically, as illustrated in FIG. 3, the plurality of crops V1 is planted to be linearly arranged in a longitudinal direction A1 in a plan view. The plurality of crops V1 linearly arranged in the longitudinal direction A1 constitute a crop row Vr1. FIG. 3 illustrates the three crop rows Vr1 each including the six crops V1 arranged in the longitudinal direction A1. The crop rows Vr1 are arranged at a predetermined pitch W1 in a widthwise direction A2. Accordingly, a work path that has a width W2 (< W1) corresponding to the interval between the crop rows Vr1 and extends along the longitudinal direction A1 is formed between the adjacent crop rows Vr1. The work vehicle 1 spreads a spread material (medicinal solution) to the crops V1 while moving (traveling) in the longitudinal direction A1 through the work path. The crop row Vr1 includes the plurality of crops V1 (work objects) and is an example of a plurality of work target rows arranged in the field F1.

The work vehicle 1 spreads medicinal solution to the crop V1 in a state where the spreader 401 is attached as the work machine 400. In this case, the medicinal solution is an example of the spread material, and the crop V1 to which the spread material (medicinal solution) is spread is an example of the spread object. The term "medicinal solution" as a spread material described here is an agricultural medicine used for improving the efficiency of agriculture or preserving agricultural products and includes herbicides, fungicides, antifungal agents, insecticides, rodenticides, growth promoters and germination inhibitors for the crop V1, and the like.

Further, in a state where the weeder 402 is attached as the work machine 400, the work vehicle 1 removes weeds around the crop V1. The weeding work includes "inter-plant weeding" for removing weeds between the plurality of crops V1 constituting the one crop row Vr1 and "inter-row weeding" for removing weeds between a pair of the adjacent crop rows Vr1. According to the present embodiment, the common weeder 402 performs the inter-plant weeding and the inter-row weeding.

As will be described below in detail, the work vehicle 1 traveling in the field F1 includes the machine body 10 having a gate-like shape. Specifically, the machine body 10 includes a first block 10L and a second block 10R arranged side by side in a right-left direction D2 and a connecting portion 10C connecting upper end portions of the first block 10L and the second block 10R. Thus, the machine body 10 forms a gate-like shape surrounding three sides, i.e., the left side, the right side, and the upper side, of a space Sp1 with the first block 10L, the second block 10R, and the connecting portion 10C. That is, the space Sp1 opened in a front-back direction D3 is formed inside the machine body 10.

Further, the work vehicle 1 includes a traveling unit 11 including a pair of crawlers 111L and 111R arranged in the right-left direction D2. The pair of crawlers 111L and 111R is provided in lower portions of the first block 10L and the second block 10R, respectively, and is located on both sides of the space Sp1 in the right-left direction D2.

As illustrated in FIG. 2, the work vehicle 1 can perform work (spreading work or weeding work) on the crops V1 in the crop row Vr1 and the crops V1 in the adjacent crop row Vr1 to the crop row Vr1 while traveling in a posture straddling the one crop row Vr1 with the machine body 10 formed in a gate shape. In other words, the work vehicle 1 can travel to allow the crops V1 as work objects to pass through the space Sp1 inside the machine body 10 formed in a gate shape. That is, as illustrated in FIG. 2, when there are crop rows Vr11, Vr12, and Vr13 as three work target rows arranged in the right-left direction D2, the work vehicle 1 can travel by straddling the arbitrary crop row Vr1 of the three crop rows Vr11, Vr12, and Vr13 with the machine body 10.

Here, when the machine body 10 straddles the central crop row Vr12, the first block 10L travels on the work path between the leftmost crop row Vr11 and the crop row Vr12, and the second block 10R travels on the work path between the rightmost crop row Vr13 and the crop row Vr12. At this time, in a state where the spreader 401 is attached as the work machine 400, the work vehicle 1 can simultaneously spread the spread material (medicinal solution) to the crops V11 of the crop row Vr11, the crops V12 of the crop row Vr12, and the crops V13 of the crop row Vr13. As described above, the work vehicle 1 according to the present embodiment can simultaneously spread the spread material (medicinal solution) to the spread objects (the crops V1) corresponding to three rows during traveling, and thus the spreading work is more efficient than that in the configuration in which the spread material is spread by one row.

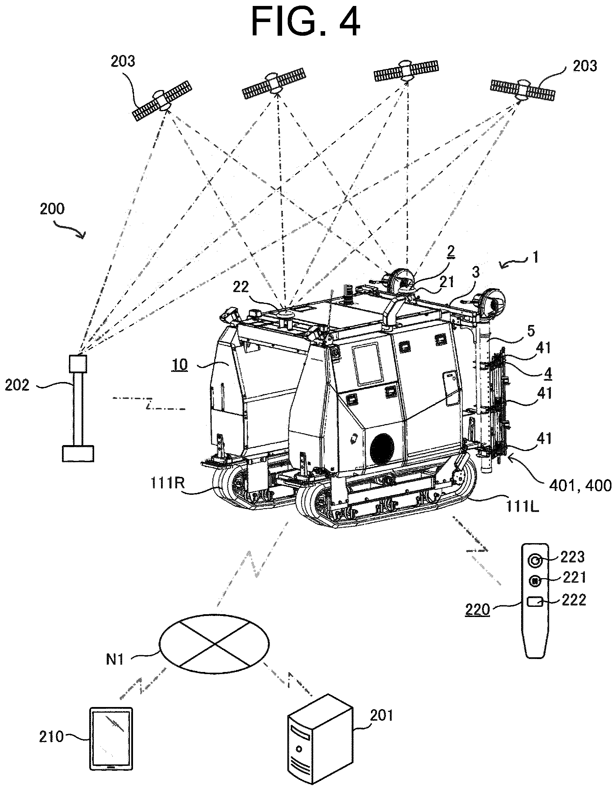

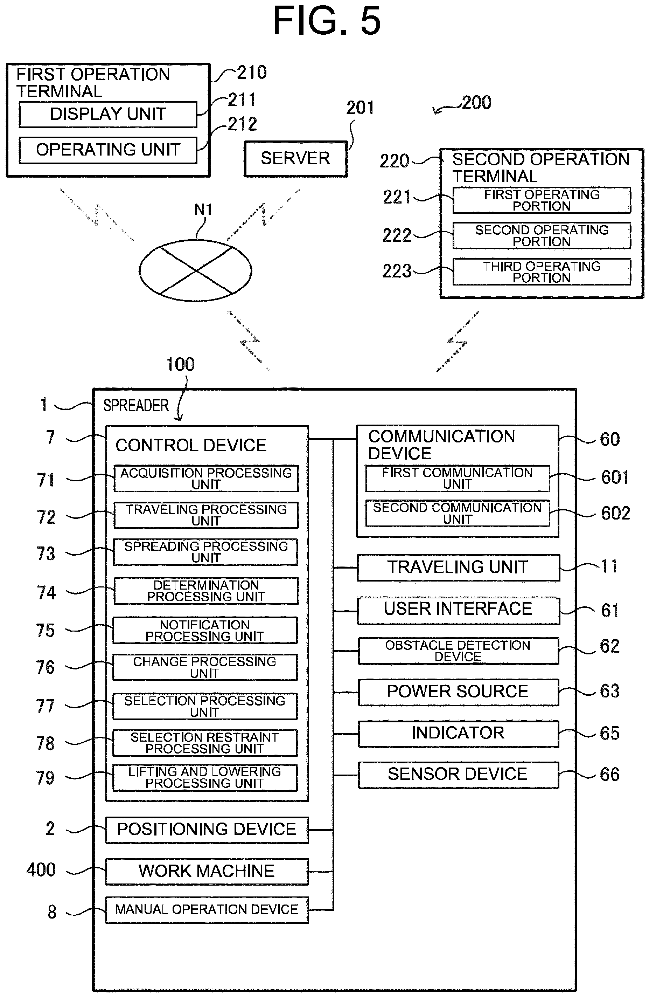

Further, according to the present embodiment, as an example, the work vehicle 1 is an unmanned vehicle that acts by autonomous driving regardless of an operation (including a remote operation) by a person (operator). Therefore, as illustrated in FIGS. 4 and 5, the work vehicle 1 forms an automatic work system 200 together with a first operation terminal 210, a second operation terminal 220, a server 201, a base station 202, a satellite 203, and the like. In other words, the automatic work system 200 includes the work vehicle 1, the first operation terminal 210, the second operation terminal 220, the server 201, the base station 202, and the satellite 203. However, at least one of the first operation terminal 210, the second operation terminal 220, the server 201, the base station 202, and the satellite 203 does not need to be included in the constituent elements of the automatic work system 200, and for example, the automatic work system 200 does not need to include the server 201, the base station 202, and the satellite 203.

The work vehicle 1, the first operation terminal 210, the second operation terminal 220, and the server 201 are communicable with each other. The term "communicable" described in the present disclosure means that information can be transmitted and received directly or indirectly via a communication network (network) N1, a relay, or the like, by an appropriate communication method such as wired communication or wireless communication (communication using radio waves or light as media). For example, the work vehicle 1 and the first operation terminal 210 can communicate with each other via the communication network N1 such as the Internet, a local area network (LAN), a wide area network (WAN), a public phone line, a cellular phone line network, a packet line network, or a wireless LAN. Here, the work vehicle 1 and the first operation terminal 210 are each wirelessly connected to the communication network N1. Therefore, the communication between the work vehicle 1 and the first operation terminal 210 includes at least wireless communication. In addition, each of the work vehicle 1 and the first operation terminal 210 can also wirelessly communicate with the server 201 via the communication network N1.

The satellite 203 is a positioning satellite forming a satellite positioning system such as a global navigation satellite system (GNSS) and transmits a GNSS signal (satellite signal). The base station 202 is a reference point (reference station) forming the satellite positioning system. The base station 202 transmits, to the work vehicle 1, the correction information for calculating the current position, and the like, of the work vehicle 1.

The work vehicle 1 according to the present embodiment includes a positioning device 2 that detects the current position (latitude, longitude, altitude, and the like), the current orientation, and the like, of the machine body 10. The positioning device 2 executes positioning processing to specify (calculate) the current position, the current orientation, and the like, of the machine body 10 by using the GNSS signal transmitted from the satellite 203. The positioning device 2 employs, for example, a relatively high-accurate positioning method such as real time kinematic (RTK) positioning in which the position is determined based on the positioning information (GNSS signals or the like) received by two receivers (the base station 202 and an antenna 21) and the correction information generated by the base station 202.

The first operation terminal 210 is, for example, a general-purpose information processing apparatus, such as a smartphone or a tablet terminal, which can be carried by an operator. The first operation terminal 210 is configured to be able to remotely operate the work vehicle 1 by outputting (transmitting), to the work vehicle 1, at least a stop instruction (temporary stop instruction) for stopping the autonomous travel of the work vehicle 1 in response to an operation of the operator. Here, the first operation terminal 210 wirelessly communicates with the work vehicle 1 via the communication network N1, and thus can control the work vehicle 1 even at a distance from the work vehicle 1, that is, at a remote location in the field F1, as long as the environment allows connection to (communication with) the communication network N1.

As illustrated in FIG. 5, the first operation terminal 210 includes a display unit 211 that displays various types of information and an operating unit 212 that receives an operation. The display unit 211 includes, for example, a liquid crystal display, an organic EL display, or the like. The operating unit 212 includes, for example, a touch panel, a physical switch, a mouse, or a keyboard. According to the present embodiment, as an example, the display unit 211 including a liquid crystal display and the operating unit 212 including a touch panel are integrated to form a touch panel display. Therefore, the operator can output, for example, a stop instruction (temporary stop instruction) to the work vehicle 1 from the first operation terminal 210 by operating the operating unit 212 on an operation screen displayed on the display unit 211.

Further, the first operation terminal 210 has a function to set (register) various types of information about the control of the work vehicle 1, such as a target route for autonomous travel of the work vehicle 1. That is, the operator can set the target route and the like by operating the operating unit 212 on the operation screen displayed on the display unit 211. The information set here, such as the target route, is transmitted to the work vehicle 1 directly or indirectly via the server 201 or the like, and is used for autonomous travel of the work vehicle 1.

In addition, the first operation terminal 210 can display, on the display unit 211, various types of information related to an action of the work vehicle 1, such as the current position, the current orientation, and the work status of the work vehicle 1, during the autonomous travel of the work vehicle 1. As an example, the first operation terminal 210 displays, on the display unit 211, a monitoring screen that displays the current position, and the like, of the work vehicle 1 together with the target route on a map that represents the field F1 so that the operator can easily understand the status of the work vehicle in a visual manner. Here, the monitoring screen also preferably displays, for example, information such as the remaining amount of medicinal solution as a spread material, the remaining amount of fuel, and the remaining amount of battery.

The second operation terminal 220 is a dedicated wireless communication terminal that can be carried by an operator. The second operation terminal 220 is configured to be able to remotely operate the work vehicle 1 by outputting (transmitting), to the work vehicle 1, at least a stop instruction (temporary stop instruction) for stopping the autonomous travel of the work vehicle 1 in response to an operation of the operator. Here, the second operation terminal 220 is configured to be able to communicate with the work vehicle 1 by communication of a different system from the first operation terminal 210.

Specifically, the second operation terminal 220 communicates wirelessly and directly with the work vehicle 1 without using the communication network N1, and thus the work vehicle 1 can be operated even from a position away from the work vehicle 1 as long as the environment allows connection to (communication with) the work vehicle 1. However, the range in which the second operation terminal 220 can be connected to the work vehicle 1 is limited to a range within a shorter distance from the work vehicle 1 than the first operation terminal 210, such as within the field F1 or around the field F1. Therefore, basically, the operator can control the work vehicle 1 by operating the second operation terminal 220 as long as the operator can visually recognize the work vehicle 1.

As illustrated in FIGS. 4 and 5, the second operation terminal 220 includes a first operating portion 221, a second operating portion 222, and a third operating portion 223, each of which individually receives an operation. Each of the first operating portion 221, the second operating portion 222, and the third operating portion 223 includes, for example, a physical switch, a touch panel, a mouse, or a keyboard. According to the present embodiment, as an example, the first operating portion 221, the second operating portion 222, and the third operating portion 223 are each configured by a momentary push button switch which is a physical switch (mechanical switch). Therefore, by individually operating the first operating portion 221, the second operating portion 222, and the third operating portion 223, the operator can, for example, output a stop instruction (a temporary stop instruction and an emergency stop instruction) to the work vehicle 1 from the second operation terminal 220.

Here, different functions are assigned to the first operating portion 221, the second operating portion 222, and the third operating portion 223. Therefore, the second operation terminal 220 outputs (transmits) different instructions to the work vehicle 1 depending on which of the first operating portion 221, the second operating portion 222, and the third operating portion 223 is pressed (operated) by the operator. Specifically, "temporary stop" is assigned to the first operating portion 221, "emergency stop" is assigned to the second operating portion 222, and "travel start" is assigned to the third operating portion 223. Therefore, for example, when the operator operates the first operating portion 221, the second operation terminal 220 outputs a temporary stop instruction which is a kind of stop instruction for stopping the autonomous travel of the work vehicle 1.

As described above, according to the present embodiment, the work vehicle 1 can wirelessly communicate with a plurality of types of operation terminals including at least the first operation terminal 210 and the second operation terminal 220 and is controlled in accordance with an instruction from each of the plurality of types of operation terminals. In other words, the first operation terminal 210 and the second operation terminal 220 each form a remote operation device (remote controller) capable of remotely operating the work vehicle 1, and the operator can stop the autonomous travel of the work vehicle 1 even at a place away from the work vehicle 1.

The server 201 is an information processing apparatus such as a server device. The server 201 transmits, to the work vehicle 1, information such as a target route along which the work vehicle 1 autonomously travels.

Further, according to the present embodiment, for convenience of description, as illustrated in FIG. 1, the vertical direction in a state where the work vehicle 1 is usable is defined as an up-down direction D1. Further, the right-left direction D2 and the front-back direction D3 are defined with reference to the direction viewed from the center point of the work vehicle 1 in a plan view. That is, the traveling direction of the work vehicle 1 when the work vehicle 1 moves forward is the front side in the front-back direction D3, and the traveling direction of the work vehicle 1 when the work vehicle 1 moves backward is the rear side in the front-back direction D3. However, these directions are not intended to limit the direction of use (the direction during use) of the work vehicle 1.

### [2] Details of Work Vehicle

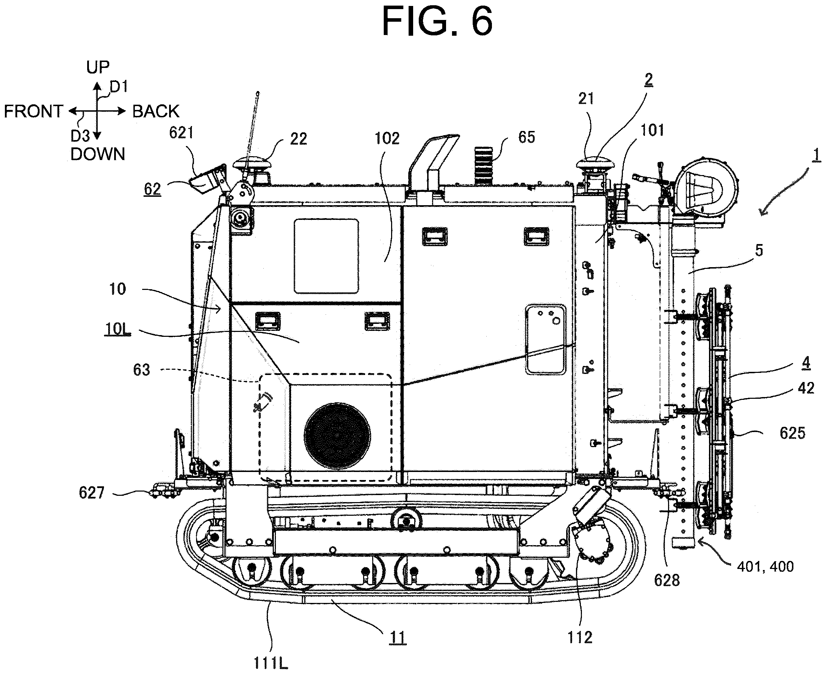

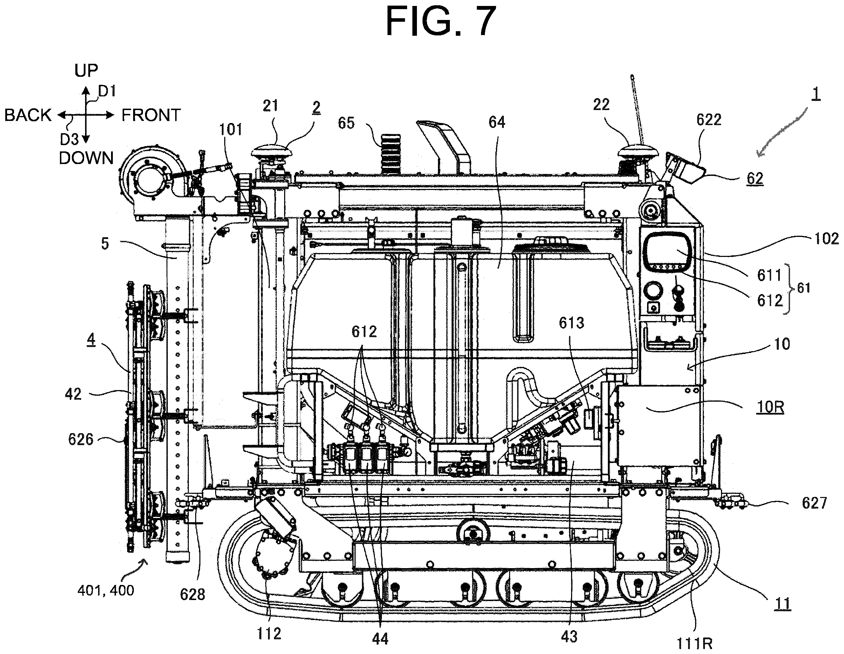

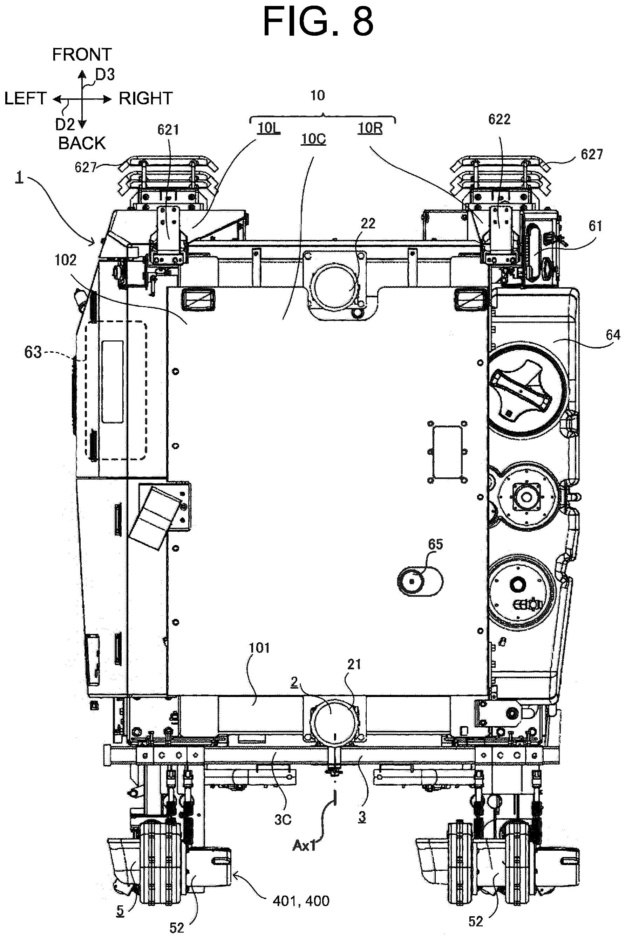

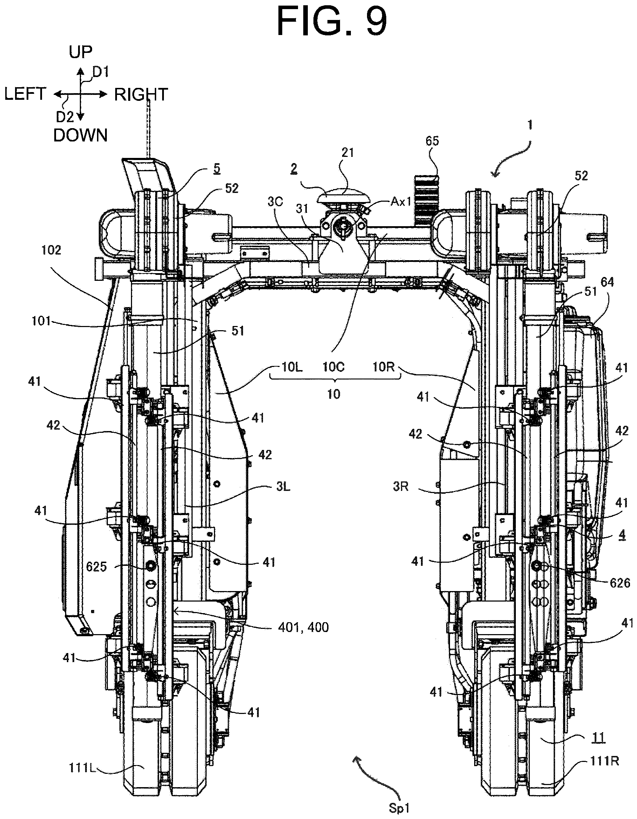

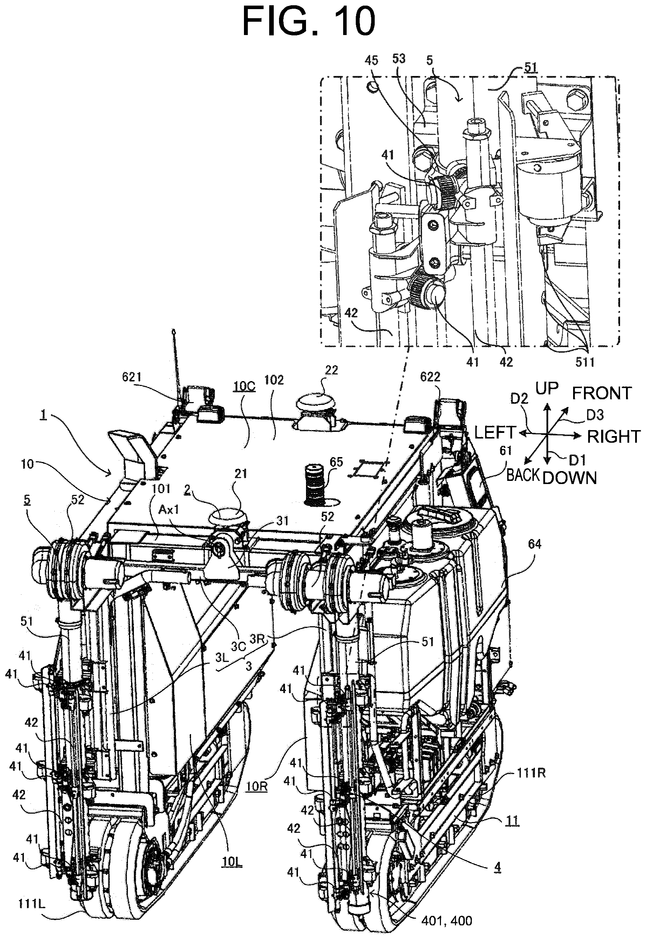

Next, the configuration of the work vehicle 1 will be described in more detail with reference to FIGS. 1, 2, and 5 to 14. FIG. 1 is an external view of the work vehicle 1 as viewed from the left front side, and FIG. 2 is an external view of the back surface of the work vehicle 1 as viewed from the back surface side (rear side). FIG. 5 is a schematic block diagram illustrating a main configuration of the work vehicle 1. FIG. 6 is an external view of a left side surface of the work vehicle 1 as viewed from the left side, FIG. 7 is an external view of a right side surface of the work vehicle 1 as viewed from the right side, and FIG. 8 is an external view of an upper surface of the work vehicle 1 as viewed from above. FIG. 9 is an external view of the back surface of the work vehicle 1 as viewed from the back surface side (rear side). FIG. 10 is a schematic view illustrating a state in which the work vehicle 1 is viewed obliquely from the rear side, and is a partially enlarged view illustrated in a dash-dotted line.

The work vehicle 1 includes the machine body 10, the traveling unit 11, a support frame 3, and the work machine 400. The work machine 400 is detachably attached to the machine body 10 and, as the work vehicle 1, the work machine 400 is attachable and detachable. According to the present embodiment, the work machine 400 attachable to the machine body 10 includes two types of work machines, i.e., the spreader 401 (see FIG. 1 and the like) and the weeder 402 (see FIG. 11 and the like) as described above.

According to the present embodiment, as illustrated in FIG. 5, the work vehicle 1 further includes the positioning device 2, a control device 7, a manual operation device 8, a communication device 60, a user interface 61, an obstacle detection device 62, a power source 63, a tank 64 (see FIG. 7), an indicator 65, a sensor device 66, and the like. The work vehicle 1 further includes a fuel tank, a battery, and the like. According to the present embodiment, the structure of the work vehicle 1 such as the machine body 10 and the support frame 3 is basically made of metal, and the material is selected according to the required strength, weather resistance, and the like. However, the structure of the work vehicle 1 is not limited to being made of metal, and for example, resin, wood, or the like, may be used as appropriate.

### [2.1] Specific Configuration Other Than Work Machine

First, a specific configuration of the work vehicle 1 excluding the work machine 400 will be described.

The machine body 10 is a main body of the work vehicle 1 and supports most of the components of the work vehicle 1 such as the positioning device 2 and the support frame 3. The machine body 10 includes a frame 101 (see FIG. 2) and a cover 102. The frame 101 is a member forming a framework of the machine body 10 and supports heavy objects such as the power source 63 and the tank 64. The cover 102 is a member forming an external shell of the machine body 10 and is attached to the frame 101 to cover at least a part of the frame 101 and members mounted on the frame 101. At a part of the rear surface (back surface) and the right side surface of the machine body 10, the frame 101 is not covered with the cover 102, and the frame 101 is exposed. The cover 102 is divided into a plurality of portions, and the plurality of portions is configured to be individually detachable from the frame 101. Therefore, for example, only a portion of the cover 102 corresponding to a part of the devices (members) such as the power source 63 can be removed, and thus the part of the devices (members) such as the power source 63 can be exposed.

As described above, the machine body 10 includes the first block 10L and the second block 10R arranged side by side in the right-left direction D2. The first block 10L and the second block 10R are opposed to each other with an interval of a certain value or more therebetween in the right-left direction D2. According to the present embodiment, as an example, the first block 10L is located on the left side, and the second block 10R is located on the right side. Therefore, the left side portion of the machine body 10 is formed by the first block 10L, and the right side portion of the machine body 10 is formed by the second block 10R. Further, the machine body 10 includes the connecting portion 10C that connects the first block 10L and the second block 10R. In a front view (as viewed from the front), the connecting portion 10C has a length along the right-left direction D2, and the first block 10L and the second block 10R each have a length along the up-down direction D1.

Here, the connecting portion 10C connects the upper end portions of the first block 10L and the second block 10R to each other and therefore, in other words, the first block 10L and the second block 10R each protrude downward from both end portions (in the right-left direction D2) of the connecting portion 10C. Thus, the machine body 10 forms a gate-like shape opened downward in addition to both sides in the front-back direction D3 with the first block 10L, the second block 10R, and the connecting portion 10C. Further, the space Sp1, which is surrounded on three sides by the first block 10L, the second block 10R, and the connecting portion 10C and is opened in the front-back direction D3, is formed inside the machine body 10.

In short, as illustrated in FIG. 2, the machine body 10 forms, between the first block 10L and the second block 10R, the space Sp1 through which the crop V1 (work object) passes, which is a target of the work (spreading work) by the work machine 400 (here, the spreader 401). Specifically, the dimensions of each part of the machine body 10 are set to form the space Sp1 having a height and a width equal to or larger than the standard size of the crop V1, which is a spread object, as a reference. Therefore, in the case of the crop V1 having the standard size, the machine body 10 allows the crop V1 to pass through the space Sp1 in a state where the machine body 10 straddles the crop V1 and in a state where the interval of a predetermined value or more is provided so that the crop V1 does not come into contact with the machine body 10. When the crop V1 passes through the space Sp1, the first block 10L is located on the left side of the crop V1, the second block 10R is located on the right side of the crop V1, and the connecting portion 10C is located above the crop V1.

More specifically, according to the present embodiment, the machine body 10 is configured to be substantially symmetrical in the right-left direction D2. The first block 10L and the second block 10R are formed in a rectangular shape having substantially the same size and the same shape in a side view. The first block 10L and the second block 10R each have a flat shape in the right-left direction D2 in which the dimension in the right-left direction D2 is the smallest among the up-down direction D1, the right-left direction D2, and the front-back direction D3. Further, the first block 10L and the second block 10R are each formed in a tapered shape in which the dimension in the right-left direction D2 decreases toward the upper end side at a portion above the central portion in the up-down direction D1. The connecting portion 10C is formed in a rectangular shape such that the dimension in the front-back direction D3 is larger than that in the right-left direction D2 in a plan view. The connecting portion 10C has a flat shape in the up-down direction D1 in which the dimension in the up-down direction D1 is the smallest among the up-down direction D1, the right-left direction D2, and the front-back direction D3.

In this way, the machine body 10 can be roughly divided into three portions (blocks), i.e., the first block 10L, the second block 10R, and the connecting portion 10C. The first block 10L, the second block 10R, and the connecting portion 10C each include the frame 101 and the cover 102. In other words, the first block 10L and the second block 10R each include the frame 101 and the cover 102. Further, most of the components of the work vehicle 1 such as the positioning device 2 and the support frame 3 are provided in a distributed manner in the first block 10L, the second block 10R, and the connecting portion 10C.

The traveling unit 11 is a traveling device (vehicle body) that causes the work vehicle 1 to travel and is provided in a lower portion of the machine body 10. The traveling unit 11 allows the machine body 10 to travel (including turning) on the ground to move in the right-left direction D2 and the front-back direction D3 in the field F1. Since the traveling unit 11 is provided in the machine body 10, the work vehicle 1 can perform work while moving in the field F1.

The traveling unit 11 includes a pair of crawlers (crawler belts) 111L and 111R arranged in the right-left direction D2 (see FIG. 1). The pair of crawlers 111L and 111R is arranged at a certain interval in the right-left direction D2, and the space Sp1 is formed between the pair of crawlers 111L and 111R to allow the passage of the crop V1, which is a work object. Specifically, the left crawler 111L located on the left side of the space Sp1 and the right crawler 111R located on the right side of the space Sp1 are opposed to each other across the space Sp1. When the crawler 111L on the left side and the crawler 111R on the right side are not particularly distinguished from each other, each of the crawlers 111L and 111R is also simply referred to as "crawler 111". The traveling unit 11 includes a motor 112 (see FIG. 1) that drives the crawler 111. Specifically, the traveling unit 11 is a crawler-type (tracked) traveling device that causes the work vehicle 1 to travel by driving the endless belt-like crawler 111 with the motor 112.

At least the two motors 112 are provided corresponding to the pair of crawlers 111L and 111R. The left motor 112 that drives the crawler 111L on the left side and the right motor 112 that drives the crawler 111R on the right side can individually drive the crawlers 111. According to the present embodiment, as an example, the motor 112 is a hydraulic motor (hydraulic actuator) and drives the crawler 111 with hydraulic oil supplied from a hydraulic pump. With this configuration, even when the road surface condition of the field F1 is rough, the machine body 10 can travel in a relatively stable manner.

Here, the crawler 111 and the motor 112 are provided below each of the first block 10L and the second block 10R. That is, the first block 10L includes the left crawler 111L and the motor 112 that drives the crawler 111L, and the second block 10R includes the right crawler 111R and the motor 112 that drives the crawler 111R. According to the present embodiment, the pair of crawlers 111L and 111R and the pair of motors 112 are configured to be substantially symmetrical in the right-left direction D2. In this way, the pair of traveling units 11 is arranged to be separated from each other in the right-left direction D2 by the space Sp1 so that the work vehicle 1 can travel in a relatively stable posture in various road surface conditions of the field F1 including a laterally inclined slope, or the like, in which the work vehicle 1 gets lower on either side in the right-left direction D2.

Here, the pair of crawlers 111L and 111R is driven with the power from the power source 63 in a state where independent speed change by a hydrostatic infinite variable-speed drive is possible. Therefore, when the pair of crawlers 111L and 111R is driven at an equal speed in the forward direction, the machine body 10 enters a forward traveling state in which the machine body 10 travels straight in the forward direction, and when the pair of crawlers 111L and 111R is driven at an equal speed in the backward direction, the machine body 10 enters a backward traveling state in which the machine body 10 travels straight in the backward direction. Further, when the pair of crawlers 111L and 111R is driven at an unequal speed in the forward direction, the machine body 10 enters a forward turning state in which the machine body 10 turns while moving forward, and when the pair of crawlers 111L and 111R is driven at an unequal speed in the backward direction, the machine body 10 enters a backward turning state in which the machine body 10 turns while moving backward. Further, the machine body 10 enters a pivot turn (skid turn) state when one of the pair of crawlers 111L and 111R is driven in a state where the driving of the other of the pair of crawlers 111L and 111R is stopped, and enters a spin turn (neutral turn) state when the pair of crawlers 111L and 111R is driven at an equal speed in the forward direction and the backward direction. The machine body 10 enters a traveling stopped state when the driving of the pair of crawlers 111L and 111R is stopped.

The power source 63 and the like are mounted on the first block 10L, and the tank 64 and the like are mounted on the second block 10R. In this way, the components of the work vehicle 1 are arranged in a distributed manner on the first block 10L and the second block 10R of the machine body 10 so that the work vehicle 1 is balanced in the right-left direction D2 and has a low center of gravity. As a result, the work vehicle 1 can stably travel on the slope, or the like, of the field F1.

As described above, the positioning device 2 is a device that detects the current position, the current orientation, and the like, of the machine body 10. The positioning device 2 includes at least the antenna 21. The antenna 21 receives a GNSS signal, or the like, transmitted from the satellite 203. Specifically, the antenna 21 includes a position specifying antenna to specify the position of the machine body 10. Here, the antenna 21 is provided on the upper surface (top surface) of the machine body 10 to easily receive signals (GNSS signals) from the satellite 203. In other words, the antenna 21 is provided at a position higher than the highest position of the machine body 10. Further, the positioning device 2 includes a posture detection unit that detects the posture of the machine body 10, and the like.

According to the present embodiment, in addition to the antenna 21, which is a first antenna, the positioning device 2 further includes an antenna 22, which is a second antenna. The positioning device 2 receives GNSS signals, or the like, by each of the two antennas 21 and 22. Here, the antenna 22 (the second antenna) is provided to be aligned with the antenna 21 (the first antenna) in the front-back direction D3. Accordingly, the positioning device 2 can transmit and receive signals (GNSS signals, or the like) by each of the antennas 21 and 22. In particular, when the antennas 21 and 22 are position specifying antennas, the current position can be specified in each of the front portion and the rear portion of the machine body 10, and thus the orientation (current orientation) of the machine body 10 can also be specified.

The support frame 3 is a member that is attached to one end portion of the machine body 10 in the front-back direction D3 and supports the work machine 400 (the spreader 401 or the weeder 402). According to the present embodiment, the support frame 3 is attached to a rear end portion of the machine body 10. Similarly to the machine body 10, the support frame 3 has a gate-like shape and is provided at a position overlapped with the machine body 10 in a rear view (when viewed from the rear). Specifically, the support frame 3 includes a vertical frame 3L (first vertical frame) and a vertical frame 3R (second vertical frame) arranged side by side in the right-left direction D2 and a horizontal frame 3C that connects upper end portions of the vertical frame 3L and the vertical frame 3R. Accordingly, the support frame 3 forms a gate-like shape surrounding three sides, i.e., the left side, the right side, and the upper side, of the space Sp1 with the vertical frame 3L, the vertical frame 3R, and the horizontal frame 3C.

Specifically, the support frame 3 includes the vertical frame 3L and the vertical frame 3R arranged side by side in the right-left direction D2. The vertical frame 3L and the vertical frame 3R are opposed to each other with an interval of a certain value or more therebetween in the right-left direction D2. According to the present embodiment, as an example, the vertical frame 3L is located on the left side, and the vertical frame 3R is located on the right side. Therefore, the vertical frame 3L is located behind the first block 10L of the machine body 10, and the vertical frame 3R is located behind the second block 10R of the machine body 10. In a rear view (as viewed from the rear), the horizontal frame 3C has a length along the right-left direction D2, and the vertical frame 3L and the vertical frame 3R each have a length along the up-down direction D1.

Here, the horizontal frame 3C connects the upper end portions of the vertical frame 3L and the vertical frame 3R to each other and therefore, in other words, the vertical frame 3L and the vertical frame 3R each protrude downward from both end portions (in the right-left direction D2) of the horizontal frame 3C. Thus, the support frame 3 includes the horizontal frame 3C having a length along the right-left direction D2 and the pair of vertical frames 3L and 3R that each have a length along the up-down direction D1 and protrude downward from both end portions of the horizontal frame 3C. Thus, the support frame 3 forms a gate-like shape opened downward in addition to both sides in the front-back direction D3 with the vertical frame 3L, the vertical frame 3R, and the horizontal frame 3C. Further, the space Sp1, which is surrounded on three sides by the vertical frame 3L, the vertical frame 3R, and the horizontal frame 3C and is opened in the front-back direction D3, is formed inside the support frame 3.

In short, the support frame 3 forms, between the pair of vertical frames 3L and 3R, the space Sp1 through which the crop V1 (work object) passes, which is a target of the work. Specifically, the dimensions of each part of the support frame 3 are set to form the space Sp1 having a height and a width equal to or larger than the standard size of the crop V1, which is a work object, as a reference. Therefore, in the case of the crop V1 having the standard size, the support frame 3 allows the crop V1 to pass through the space Sp1 in a state where the support frame 3 straddles the crop V1 and in a state where the interval of a predetermined value or more is provided so that the crop V1 does not come into contact with the support frame 3. When the crop V1 passes through the space Sp1, the vertical frame 3L is located on the left side of the crop V1, the vertical frame 3R is located on the right side of the crop V1, and the horizontal frame 3C is located above the crop V1.

More specifically, according to the present embodiment, the support frame 3 is configured to be substantially symmetrical in the right-left direction D2. The vertical frame 3L and the vertical frame 3R have a cylindrical shape having a circular cross section. According to the present embodiment, as an example, the vertical frame 3L and the vertical frame 3R are each configured such that two cylindrical members are arranged in parallel. The horizontal frame 3C has a square tubular shape having a rectangular cross section. Here, the vertical frame 3L and the vertical frame 3R are each firmly fixed to the horizontal frame 3C by an appropriate fixing way such as a connecting fitting, a brace fitting, or welding. Therefore, the vertical frame 3L and the vertical frame 3R each maintain the state of being orthogonal to the horizontal frame 3C. In other words, in a rear view, a corner portion between the vertical frame 3L and the horizontal frame 3C and a corner portion between the vertical frame 3R and the horizontal frame 3C each form a right angle.

According to the present embodiment, the support frame 3 is supported by the machine body 10 to be rotatable about a rotation axis Ax1 (see FIGS. 8 and 9) while maintaining the relative positional relationship between the pair of vertical frames 3L and 3R and the horizontal frame 3C. The rotation axis Ax1 is an axis that passes through a fulcrum portion 31 provided on the horizontal frame 3C and extends along the front-back direction D3. That is, the support frame 3 that supports the work machine 400 is supported by the machine body 10 to be rotatable about the rotation axis Ax1 along the front-back direction D3. Here, the "rotation axis" described in the present disclosure means a virtual axis (straight line) which is the center of the rotational motion of a rotary body. In other words, the rotation axis Ax1 is a virtual axis with a lack of substance. However, the rotation axis Ax1 may be a member with a substance, such as a shaft pin.

As illustrated in FIG. 5, the communication device 60 includes a first communication unit 601 and a second communication unit 602. The first communication unit 601 and the second communication unit 602 are communication interfaces that can act individually and are used to, by performing communications in accordance with different protocols, perform data communications with external devices such as the server 201, the first operation terminal 210, and the second operation terminal 220 in accordance with a predetermined communication protocol. That is, the communication device 60 is configured to be able to perform communications in a plurality of communication channels (frequency bands or the like) including a communication by the first communication unit 601 and a communication by the second communication unit 602.

The user interface 61 is a device that at least either outputs information to a user or receives an operation. Here, as illustrated in FIG. 7, the user interface 61 includes a display unit 611 such as a liquid crystal display or an organic EL display which displays various types of information and an operating unit 612 such as a touch panel, a knob, or a push button switch which receives an operation. An operator, which is an example of the user, can specify various settings by operating the operating unit 612 in accordance with an operation screen displayed on the display unit 611. Specifically, the operator operates the operating unit 612 of the user interface 61 to set action conditions, and the like, of the work machine 400. Examples of the action conditions of the work machine 400 include a pressure (injection pressure), a flow rate, and the like, at the time of spreading a spread material from a spread nozzle 41 of the spreader 401.

The obstacle detection device 62 includes a first detection unit 621 and a second detection unit 622. The first detection unit 621 and the second detection unit 622 are both provided toward the front of the machine body 10. The first detection unit 621 is provided at a left front end portion of the upper surface of the machine body 10, and the second detection unit 622 is provided at a right front end portion of the upper surface of the machine body 10. That is, the obstacle detection device 62 includes a plurality of detection units (the first detection unit 621 and the second detection unit 622) that is mounted on the machine body 10 of the work vehicle 1 and is provided to be spaced apart from each other in the widthwise direction (the right-left direction D2) orthogonal to the traveling direction (the front-back direction D3) of the work vehicle 1 in a plan view.

The first detection unit 621 and the second detection unit 622 each include, for example, a sensor such as light detection and ranging (LiDAR) and detects the surrounding situation of the machine body 10. According to the present embodiment, as an example, each of the first detection unit 621 and the second detection unit 622 is a three-dimensional sensor that measures a distance to each distance measurement point (measurement object) in a measurement range by a time of flight (TOF) method of measuring a distance to a distance measurement point based on a round-trip time until light or sound reaches the distance measurement point and returns. The surrounding situation of the machine body 10 includes, for example, the presence or absence of an object (obstacle or the like) present ahead in the traveling direction of the machine body 10, the position (distance and orientation) of the object, and the like.

The obstacle detection device 62 further includes a first sensor 623 (see FIG. 1), a second sensor 624 (see FIG. 1), a third sensor 625 (see FIG. 6), and a fourth sensor 626 (see FIG. 7). The first sensor 623 and the second sensor 624 are both provided toward the front of the machine body 10, and the third sensor 625 and the fourth sensor 626 are both provided toward the rear of the machine body 10. The first sensor 623 is provided on the front surface of the first block 10L, and the second sensor 624 is provided on the front surface of the second block 10R. The third sensor 625 is attached to the vertical frame 3L, and the fourth sensor 626 is attached to the vertical frame 3R.

Each of the first sensor 623 to the fourth sensor 626 includes, for example, a sensor such as a sonar sensor, a radar, or LiDAR, and detects a surrounding situation of the machine body 10. According to the present embodiment, as an example, each of the first sensor 623 to the fourth sensor 626 is a three-dimensional sensor that measures a distance to each distance measurement point (measurement object) in a measurement range by a time of flight (TOF) method of measuring a distance to a distance measurement point based on a round-trip time until light or sound reaches the distance measurement point and returns. The surrounding situation of the machine body 10 includes, for example, the presence or absence of an object (obstacle or the like) present ahead in the traveling direction of the machine body 10, the position (distance and orientation) of the object, and the like.

The obstacle detection device 62 further includes a front contact sensor 627 and a rear contact sensor 628. The pair of right and left front contact sensors 627 is provided on the front side of the machine body 10, and the pair of right and left rear contact sensors 628 is provided on the rear side of the machine body 10. The front contact sensor 627 and the rear contact sensor 628 each detect an obstacle when the obstacle comes into contact therewith. Each sensor transmits a detection signal to the control device 7 when an obstacle is detected.

The power source 63 is a drive source that supplies power to at least the traveling unit 11. The power source 63 includes, for example, an engine such as a diesel engine. The power source 63 drives the traveling unit 11 and the like by driving the hydraulic pump and supplying the hydraulic oil from the hydraulic pump to the motor 112, and the like, of the traveling unit 11. Electronic devices such as the positioning device 2, the control device 7, and the communication device 60 are connected to a battery and can act even when the power source 63 is stopped.

The tank 64 stores a spread material such as medicinal solution. The spread material stored in the tank 64 is supplied to the spreader 401 and is spread from the spread nozzle 41 of the spreader 401. The tank 64 can be replenished with medicinal solution, which is a spread material, from the outside. The volume of the tank 64 is, for example, about 200 L.

The indicator 65 is provided on the upper surface of the machine body 10. The indicator 65 is formed in a cylindrical shape having a length in the up-down direction D1, for example. The lighting state of the indicator 65 changes in accordance with the action state of the work vehicle 1 (traveling state, execution state of the spreading work, and the like). Accordingly, the action state of the work vehicle 1 can be visually recognized even from the surroundings of the work vehicle 1.

The sensor device 66 includes, for example, a remaining amount sensor that detects the remaining amount of medicinal solution as a spread material and the remaining amount of fuel. As an example, the sensor device 66 detects the remaining amount of medicinal solution from the amount of medicinal solution in the tank 64. Similarly, the sensor device 66 detects the remaining amount of fuel from the amount of fuel in the fuel tank.

The control device 7 includes, as a main configuration, for example, a computer system including one or more processors such as a central processing unit (CPU) and one or more memories such as a read only memory (ROM) and a random access memory (RAM), and executes various types of processing (information processing). According to the present embodiment, the control device 7 is an integrated controller that performs overall control of the work vehicle 1 and includes an electronic control unit (ECU), for example. However, the control device 7 may be provided separately from the integrated controller or may include one processor or a plurality of processors as a main configuration.

As illustrated in FIG. 5, the control device 7 includes an acquisition processing unit 71, a traveling processing unit 72, a spreading processing unit 73, a determination processing unit 74, a notification processing unit 75, a change processing unit 76, a selection processing unit 77, a selection restraint processing unit 78, and a lifting and lowering processing unit 79. According to the present embodiment, as an example, since the control device 7 includes a computer system including one or more processors as a main configuration, one or more processors execute a control program and thus the plurality of functional units (the acquisition processing unit 71 and the like) above is implemented. The plurality of functional units included in the control device 7 may be provided in a plurality of housings in a distributed manner or may be provided in one housing.

The control device 7 is configured to be able to communicate with devices provided in respective parts of the machine body 10. Specifically, the control device 7 is connected to at least the traveling unit 11, the positioning device 2, the work machine 400 (the spreader 401 or the weeder 402), the communication device 60, the user interface 61, the obstacle detection device 62, the power source 63, the indicator 65, and the like. Accordingly, the control device 7 can control the traveling unit 11, the work machine 400, and the like, and can acquire electric signals from the positioning device 2, the communication device 60, the obstacle detection device 62, and the like. The control device 7 may directly transmit and receive various types of information (data) to and from each device or indirectly via a relay or the like.

Specifically, the control device 7 can communicate with, for example, the first operation terminal 210 via the communication device 60. Thus, the control device 7 can cause the display unit 211 of the first operation terminal 210 to display various types of information and can receive operation information of the operating unit 212 of the first operation terminal 210. That is, the control device 7 has at least a function as a display control unit that causes the display unit 211 of the first operation terminal 210 to display a display screen.

The control device 7 further includes an engine control unit, a hydrostatic transmission (HST) control unit that performs control related to a hydrostatic infinite variable-speed drive, and the like, in addition to the above-described functional units. The engine control unit performs control related to the engine (the power source 63). The HST control unit performs control related to the hydrostatic infinite variable-speed drive.

The acquisition processing unit 71 executes acquisition processing to acquire an electric signal (including data) from each device. According to the present embodiment, the acquisition processing unit 71 periodically or non-periodically acquires the output of each sensor of the obstacle detection device 62, information (data) such as the remaining amount of medicinal solution as a spread material and the remaining amount of fuel from the sensor device 66, and the like. The acquisition processing unit 71 may acquire various types of data from various sensors or the like directly or indirectly via an electronic control unit or the like. The data acquired by the acquisition processing unit 71 is stored in a memory or the like, for example.

The traveling processing unit 72 performs autonomous traveling processing to cause the machine body 10 to autonomously travel along a target route in the field F1 based on the positioning information or the like acquired from the positioning device 2. Specifically, the traveling processing unit 72 causes the traveling unit 11 to autonomously travel along the target route based on the positioning information including the position and orientation of the machine body 10 measured by the positioning device 2. For example, when the positioning information enters a state in which RTK positioning is possible and the operator operates (for example, presses and holds) the third operating portion 223 of the second operation terminal 220, the second operation terminal 220 outputs a travel start instruction (work start instruction) to the work vehicle 1. When the travel start instruction is acquired from the second operation terminal 220, the traveling processing unit 72 starts autonomous travel of the work vehicle 1 based on the positioning information of the machine body 10 measured by the positioning device 2. Thus, the work vehicle 1 starts autonomous travel along the target route and starts work by the work machine 400.

Further, the traveling processing unit 72 controls the traveling unit 11 in accordance with an operation signal from the manual operation device 8. That is, the control device 7 controls the traveling unit 11 by the traveling processing unit 72 so that the traveling unit 11 can be controlled in accordance with the operation of the manual operation device 8 by the operator, that is, the traveling unit 11 can be manually operated.

The spreading processing unit 73 performs spread control processing related to the work (spreading work) of the spreader 401. Specifically, when the work vehicle 1 starts autonomous travel at the work start position, the spreading processing unit 73 outputs, to the spreader 401, a switching signal for switching the spread pattern based on the control information included in the predetermined target route. When receiving the switching signal, the spreader 401 executes the spreading work in a predetermined spread pattern.

The determination processing unit 74 performs determination processing to determine a match/mismatch between first information about a first work machine and second information about a second work machine. The first work machine is the work machine 400 attached to the work vehicle 1 at a first time point in the past. The second work machine is the work machine 400 attached to the work vehicle 1 at the current time point.

The notification processing unit 75 performs notification processing to notify a determination result of the determination processing unit 74. Specifically, the notification processing unit 75 notifies, for example, the operator of the determination result of a match/mismatch between the first information and the second information in the determination processing unit 74.

The change processing unit 76 performs change processing to change a setting item related to autonomous travel of the work vehicle 1 in accordance with the state of the work machine 400 attached to the work vehicle 1.

The selection processing unit 77 performs selection processing to cause the user (operator) to select autonomous travel information from a plurality of pieces of candidate information. The term "autonomous travel information" described here is information set in association with the work machine 400 and is information used for the traveling processing unit 72 to cause the work vehicle 1 to travel autonomously.

The selection restraint processing unit 78 performs selection restraint processing to restrain selection of non-corresponding information that does not correspond to the type of the work machine 400 attached to the work vehicle 1 among the plurality of pieces of candidate information. The term "restraint" described here means processing that acts toward restriction (suppression) on a restraint target (selection of non-corresponding information) in some way. For example, the selection restraint processing includes the processing to directly restrict the selection of the non-corresponding information by preventing the non-corresponding information from being selected, such as excluding the non-corresponding information from the options. Further, the selection restraint processing includes the processing to indirectly restrict the selection of the non-corresponding information by issuing a warning to the operator by sound or light (including display).

The lifting and lowering processing unit 79 performs lifting and lowering control processing to lift and lower the weeder 402. Specifically, when the work vehicle 1 starts to travel autonomously at the work start position, the lifting and lowering processing unit 79 controls a lifting and lowering unit 46 to switch a weeding pattern based on the control information included in the predetermined target route. According to the present embodiment, the lifting and lowering processing unit 79 controls lifting and lowering of the work machine 400 (the weeder 402) during the autonomous travel of the work vehicle 1 at the timing determined based on at least the arrangement of the crop rows Vr1 (work target rows) in the field F1 (work site) and the work content.

The manual operation device 8 is a device to manually control the work vehicle 1. In the work vehicle 1, the control device 7 (the acquisition processing unit 71) acquires the operation signal output from the manual operation device 8 in response to the operation of the operator.

According to the present embodiment, the manual operation device 8 is connected to the control device 7 of the work vehicle 1 with a cable having a sufficient length and performs wired communication with the control device 7. Therefore, the operator can manually operate the work vehicle 1 with the manual operation device 8 without riding on the machine body 10 of the work vehicle 1, for example, in a state of standing around the machine body 10. Here, the manual operation device 8 may communicate with the work vehicle 1 (the control device 7) by wireless communication using radio waves or light, and even in this case, the operator can manually operate the work vehicle 1 with the manual operation device 8 from the outside of the machine body 10. In short, the manual operation device 8 can be operated outside the machine body 10. Therefore, the operator can manually operate the work vehicle 1 at a safe place outside the machine body 10, for example, when loading or unloading the work vehicle 1 onto or from a transport vehicle.

### [2.2] Specific Configuration of Spreader

Next, a specific configuration of the spreader 401 attached to the machine body 10 as the work machine 400 will be described.

The spreader 401 performs spreading work to spread the medicinal solution as a spread material on the crop V1 as a spread object. As illustrated in FIG. 10 and the like, the spreader 401 includes a nozzle unit 4 and an airflow generation unit 5. The nozzle unit 4 includes the spread nozzle 41 and the like and discharges the medicinal solution as a spread material stored in the tank 64. The airflow generation unit 5 generates an airflow for conveying the spread material (medicinal solution) discharged from the nozzle unit 4.

The nozzle unit 4 and the airflow generation unit 5 are supported by the support frame 3. Since the support frame 3 is supported by the machine body 10, the spreader 401 including the nozzle unit 4 and the airflow generation unit 5 is indirectly supported by the machine body 10. According to the present embodiment, since the support frame 3 is provided at the rear end portion of the machine body 10, the nozzle unit 4 and the airflow generation unit 5 supported by the support frame 3 are also provided at the rear end portion of the machine body 10.

The spread nozzle 41 of the nozzle unit 4 is supported by the support frame 3 and is a portion that discharges (spreads) the spread material. According to the present embodiment, as an example, the spread nozzle 41 is a discharge port (spread portion) that actually serves as an outlet of the spread material (medicinal solution). The spreader 401 includes the plurality of (12, for example, according to the present embodiment) spread nozzles 41.

The nozzle unit 4 includes, in addition to the spread nozzles 41, a spread tube 42, a pump 43 (see FIG. 7), a valve 44 (see FIG. 7), a spread pipe, and the like. According to the present embodiment, the spread nozzle 41 is attached to the spread tube 42. The spread tube 42 is connected to the pump 43 through the valve 44 with the spread pipe. The pump 43 pumps the spread material (medicinal solution) stored in the tank 64 to the spread tube 42. The valve 44 is an electronically controlled valve unit such as an electromagnetic valve and changes the pressure (spray pressure), the spread pattern, and the like, when spreading the spread material. Thus, the medicinal solution in the tank 64 is supplied to the spread nozzle 41 via the valve 44 and the spread tube 42 by the pump 43 and is discharged from the spread nozzle 41. Here, the misty medicinal solution is discharged (sprayed) from the spread nozzle 41.

More specifically, as illustrated in FIGS. 9 and 10, the spread tube 42 is a tube having a length in the up-down direction D1, and the two spread tubes 42 are attached to each of the vertical frame 3L and the vertical frame 3R of the support frame 3. That is, according to the present embodiment, the nozzle unit 4 includes the four spread tubes 42 in total. The two (the pair of) spread tubes 42 attached to each of the vertical frame 3L and the vertical frame 3R are arranged side by side in the right-left direction D2. Each of the spread tubes 42 discharges the medicinal solution as a spread material injected from the upper end portion thereof from the three spread nozzles 41 while allowing the medicinal solution to flow downward through the tube. The three spread nozzles 41 are attached to each of the spread tubes 42, and thus the nozzle unit 4 includes the 12 spread nozzles 41 in total.

Each of the spread nozzles 41 is attached to the corresponding spread tube 42 such that the position of the spread nozzle 41 can be changed in the up-down direction D1. Thus, the interval between the adjacent spread nozzles 41 and the height position of each of the spread nozzles 41 with respect to the spread tube 42 can be changed in accordance with the spread object (the crop V1). In addition, each of the spread nozzles 41 is attached such that the position in the up-down direction D1 and the right-left direction D2 with respect to the machine body 10 and the orientation (angle) can be changed in accordance with the spread object. However, in the spreader 401, the number of the spread nozzles 41 provided in each of the spread tubes 42, and the like, can be changed as appropriate in accordance with the type of spread object (the crop V1), the length of the spread tube 42, etc.

The airflow generation unit 5 generates an airflow for conveying the spread material (medicinal solution) discharged from the spread nozzle 41. The airflow generation unit 5 is supported by the support frame 3 together with the spread nozzle 41. That is, according to the present embodiment, the spreader 401 is an air assist spreader that spreads the spread material (medicinal solution) by using the airflow generated by the airflow generation unit 5. Thus, the work vehicle 1 can efficiently spread the spread material (medicinal solution) even to the spread object (the crop V1) located at a position relatively distant from the spread nozzle 41.

The airflow generation unit 5 includes a duct 51 and a blower 52. The duct 51 forms a flow path through which the air flows along the up-down direction D1. The blower 52 causes the air to flow through the duct 51. In the airflow generation unit 5, the air blown out from a blowout hole 511 (see FIG. 10) formed in the duct 51 forms an airflow. In short, the airflow generation unit 5 blows out the air, which is sent to the duct 51 by the blower 52, from the blowout hole 511 through the flow path in the duct 51 and thus generates a flow of air (airflow) flowing outward from the blowout hole 511. With this configuration, a stable airflow can be generated over a relatively wide range. Further, the airflow generation unit 5 can adjust the volume of airflow by controlling the blower 52. The airflow generation unit 5 can adjust the conveyance distance of the spread material by adjusting the air volume, and the larger the air volume, the farther the spread material can be conveyed. Therefore, in the work vehicle 1 according to the present embodiment, the spread range of the spread material by the spreader 401 can be adjusted.

More specifically, the duct 51 is a pipe having a length in the up-down direction D1, and the one duct 51 is attached to each of the vertical frame 3L and the vertical frame 3R of the support frame 3. That is, according to the present embodiment, the airflow generation unit 5 includes the two ducts 51 in total. In each of the ducts 51, the plurality of blowout holes 511 is formed on the left surfaces of the duct 51 and each of the left surfaces to be arranged in a row along the up-down direction D1. Further, the two spread tubes 42 of the nozzle unit 4 are fixed to the rear side of each of the ducts 51.

Here, the duct 51, the two spread tubes 42 attached to the duct 51, and the total of six spread nozzles 41 attached to the two spread tubes 42 are arranged symmetrically in the right-left direction D2. Of the two spread tubes 42, the three spread nozzles 41 provided in the spread tube 42 on the left side discharge the spread material (medicinal solution) toward the left front, and the three spread nozzles 41 provided in the spread tube 42 on the right side discharge the spread material (medicinal solution) toward the right front. Therefore, the misty spread material discharged from the spread nozzle 41 on the left side is carried to the left by the airflow blown out to the left from the duct 51, and the misty spread material discharged from the spread nozzle 41 on the right side is carried to the right by the airflow blown out to the right from the duct 51.

Therefore, among the plurality of (12) spread nozzles 41, the three spread nozzles 41 provided in the spread tube 42 at the leftmost end spread the medicinal solution leftward toward the crop V1 located on the left outer side of the machine body 10. Among the plurality of spread nozzles 41, the three spread nozzles 41 provided in the spread tube 42 on the left inner side adjacent to the spread tube 42 at the leftmost end spread the medicinal solution rightward toward the crop V1 located in the space Sp1 on the inner side of the machine body 10. Among the plurality of spread nozzles 41, the three spread nozzles 41 provided in the spread tube 42 at the rightmost end spread the medicinal solution rightward toward the crop V1 located on the right outer side of the machine body 10. Among the plurality of spread nozzles 41, the three spread nozzles 41 provided in the spread tube 42 on the right inner side adjacent to the spread tube 42 at the rightmost end spread the medicinal solution leftward toward the crop V1 located in the space Sp1 on the inner side of the machine body 10.

With the above-described configuration, in the spreader 401, the two spread tubes 42 and the six spread nozzles 41 provided on the vertical frame 3L of the support frame 3 function as a spread unit on the left side. The two spread tubes 42 and the six spread nozzles 41 provided on the vertical frame 3R of the support frame 3 function as a spread unit on the right side. The pair of right and left spread units is provided at the rear of the machine body 10 to be able to spread in the right-left direction D2 with the interval (the space Sp1) allowing the passage of the crop V1 between the spread units.

In addition, the spreader 401 is configured such that the plurality of (12) spread nozzles 41 is divided into a plurality of systems and the control can be performed for each system. According to the present embodiment, as an example, the six spread nozzles 41 provided in the two spread tubes 42 on the inner side in the right-left direction D2 among the four spread tubes 42 are classified into a first system, the three spread nozzles 41 provided in the leftmost spread tube 42 are classified into a second system, and the three spread nozzles 41 provided in the rightmost spread tube 42 are classified into a third system. Therefore, the spread pattern by the spreader 401 includes a full spread pattern in which the spread material (medicinal solution) is spread from all the spread nozzles 41 and a limited spread pattern in which the spread direction is limited. The limited spread pattern includes a first spread pattern for spreading with only the six spread nozzles 41 of the first system, a second spread pattern for spreading with only the three spread nozzles 41 of the second system, and a third spread pattern for spreading with only the three spread nozzles 41 of the third system. Further, the limited spread pattern includes a fourth spread pattern for spreading with only the nine spread nozzles 41 of the first and second systems, a fifth spread pattern for spreading with only the nine spread nozzles 41 of the first and third systems, and a sixth spread pattern for spreading with only the six spread nozzles 41 of the second and third systems.

The spreader 401 is controlled by the control device 7, and the above-described plurality of spread patterns (the seven patterns in total, i.e., the full spread pattern and the six limited spread patterns) are switched as appropriate. At least the valve 44 of the nozzle unit 4 is provided for each system of the plurality of spread nozzles 41, and according to the present embodiment, the three valves 44 are provided corresponding to the three systems (the first system, the second system, and the third system). The plurality of (here, three) valves 44 are individually controlled by the control device 7 to change the spread pattern. The spreader 401 can also change the spread range of the spread material by changing the pressure (spray pressure) at the time of spreading the spread material for each system. Further, according to the present embodiment, since the spread range of the spread material can be adjusted by adjusting the air volume of the airflow generation unit 5, more various spread ranges can be realized according to the spread object (the crop V1) or the spread material (medicinal solution).

According to the present embodiment, as described above, the support frame 3 is not fixed relative to the machine body 10, but is configured to be rotatable about the rotation axis Ax1. When the support frame 3 rotates, the spreader 401 supported by the support frame 3 also rotates about the rotation axis Ax1.

Further, the work vehicle 1 according to the present embodiment does not include an actuator or the like that actively rotates the support frame 3. Therefore, the support frame 3 rotates only after an external force acts on the support frame 3. For example, when the machine body 10 travels on a laterally inclined slope, the support frame 3 rotates due to the weight of the support frame 3, that is, the gravity acting on the support frame 3. Here, when the support frame 3 and the members (the spreader 401 and the like) supported by the support frame 3 have a weight balance to be symmetrical in the right-left direction D2, the support frame 3 is maintained at the neutral position as long as the machine body 10 is maintained horizontally.

With the rotatable support frame 3 as described above, for example, when the machine body 10 travels on a laterally inclined slope, the support frame 3 rotates so that unevenness (spread unevenness) in the spread amount of the spread material (medicinal solution) by the spreader 401 is less likely to occur. In short, when the support frame 3 is fixedly supported by the machine body 10, the machine body 10 may be inclined when traveling on a laterally inclined slope. In this case, for the crop V1 (spread object) extending straight in the vertical direction from the ground (the field F1), there are differences in the distances from the spread nozzles 41 to the upper portion and the lower portion of the crop V1, which may cause unevenness in the spread amount of the spread material. Conversely, in the work vehicle 1 according to the present embodiment, the support frame 3 rotates so that the support frame 3 and the spread nozzles 41 and the like supported by the support frame 3 can be maintained in the same posture as that when traveling on a horizontal surface. Therefore, even for the crop V1 (spread object) extending straight in the vertical direction from the ground (the field F1), the distances from the spread nozzles 41 to the upper portion and the lower portion of the crop V1 are less likely to vary, and the occurrence of unevenness in the spread amount of the spread material can be easily suppressed.

### [2.3] Specific Configuration of Weeder

Next, a specific configuration of the weeder 402 attached to the machine body 10 as the work machine 400 will be described.

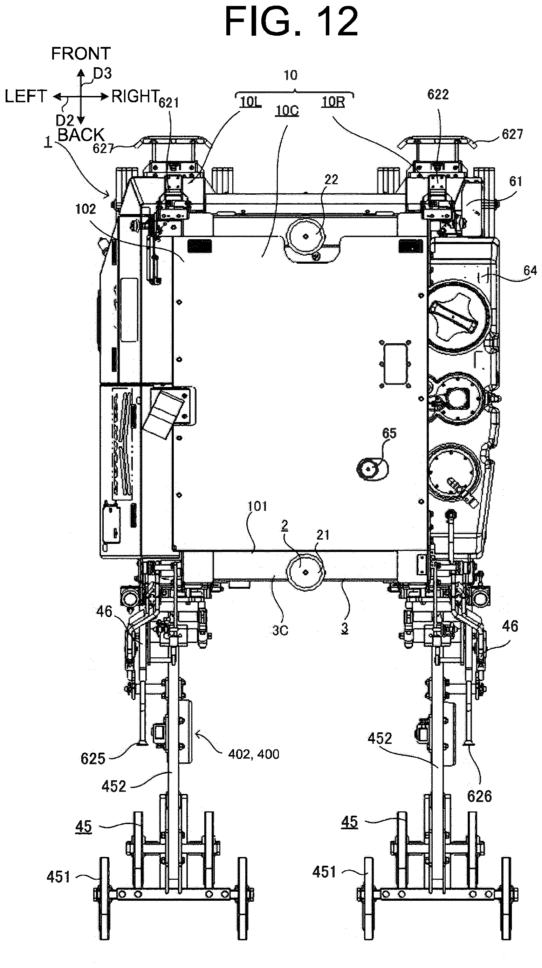

The weeder 402 executes weeding work to remove weeds around the crop V1 which is a work object in the field F1. As illustrated in FIGS. 11 and 12, the weeder 402 includes a weeding unit 45 and the lifting and lowering unit 46. The weeding unit 45 includes a cultivator 451 and the like and is towed during travel of the work vehicle 1 to remove weeds in the field F1. The lifting and lowering unit 46 lifts and lowers the weeding unit 45.

The weeding unit 45 is supported by the support frame 3 through the lifting and lowering unit 46. Since the support frame 3 is supported by the machine body 10, the weeder 402 including the weeding unit 45 and the lifting and lowering unit 46 is indirectly supported by the machine body 10. According to the present embodiment, since the support frame 3 is provided at the rear end portion of the machine body 10, the weeding unit 45 and the lifting and lowering unit 46 supported by the support frame 3 are also provided at the rear end portion of the machine body 10.

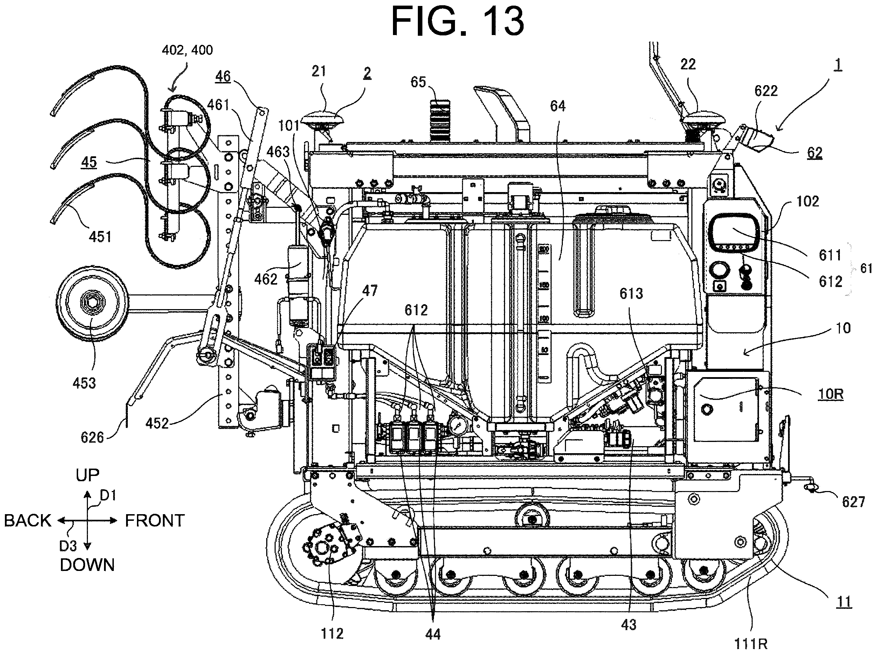

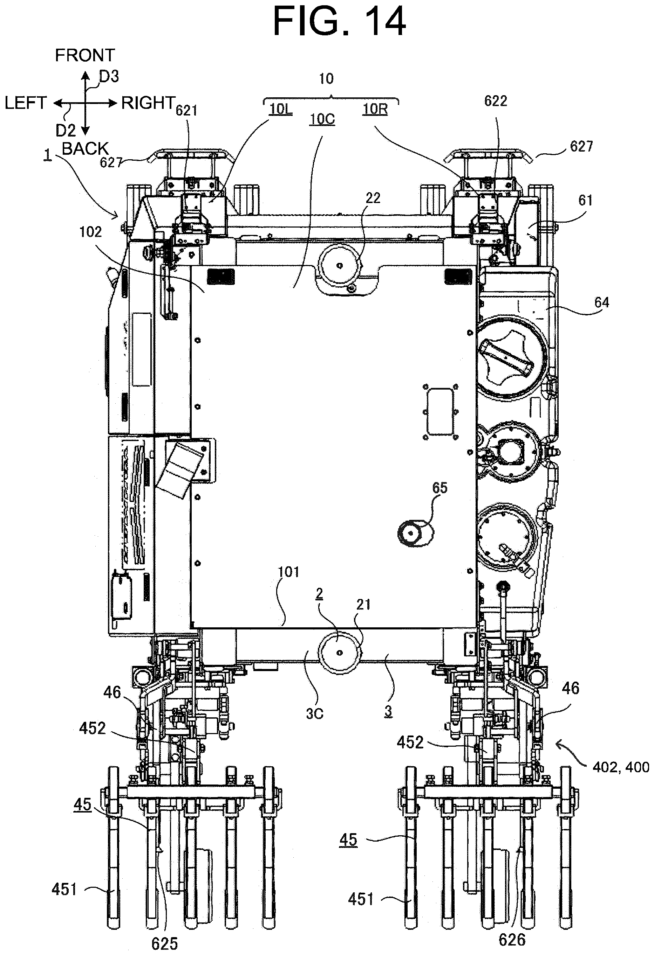

The weeding unit 45 includes an arm 452, a wheel 453, and the like, in addition to the cultivator 451. According to the present embodiment, the cultivator 451 and the wheel 453 are attached to the arm 452. The weeding unit 45 is configured to be able to change its posture between an "extended posture" in which the arm 452 extends in the front-back direction D3 as illustrated in FIGS. 11 and 12 and a "retracted posture" in which the arm 452 extends in the up-down direction D1 as illustrated in FIGS. 13 and 14. The cultivator 451 and the wheel 453 are in contact with the field F1 when the weeding unit 45 is in the extended posture, and the cultivator 451 and the wheel 453 are separated from the field F1 when the weeding unit 45 is in the retracted posture.

The lifting and lowering unit 46 lifts and lowers the weeding unit 45 between the extended posture and the retracted posture. In detail, the lifting and lowering unit 46 includes a link 461, a lifting and lowering cylinder 462, a connecting portion 463, and the like. The lifting and lowering cylinder 462 is connected to the link 461 with the connecting portion 463 and rotates the arm 452 of the weeding unit 45 via the link 461. The lifting and lowering unit 46 raises the arm 452 of the weeding unit 45 with the link 461 and thus lifts the weeding unit 45 and switches the weeding unit 45 from the extended posture to the retracted posture. Conversely, the lifting and lowering unit 46 makes the arm 452 of the weeding unit 45 lie down with the link 461 and thus lowers the weeding unit 45 and switches the weeding unit 45 from the retracted posture to the extended posture.

Thus, the weeder 402 is towed by the work vehicle 1 to perform the weeding work in a state where the weeding unit 45 is in the extended posture (the state illustrated in FIGS. 11 and 12). Conversely, the weeder 402 cannot perform the weeding work in a state where the weeding unit 45 is in the retracted posture (the state illustrated in FIGS. 13 and 14), but instead, the amount of protrusion of the weeder 402 from the work vehicle 1 (to the rear) can be suppressed to be small.

More specifically, the weeding unit 45 and the lifting and lowering unit 46 are attached to each of the vertical frame 3L and the vertical frame 3R of the support frame 3. That is, according to the present embodiment, the weeder 402 as the work machine 400 includes the pair of (two) weeding units 45 and the pair of (two) lifting and lowering units 46. The pair of weeding units 45 is arranged symmetrically in the right-left direction D2. Similarly, the pair of lifting and lowering units 46 is arranged symmetrically in the right-left direction D2.

Here, the pair of lifting and lowering units 46 can act individually, the left lifting and lowering unit 46 lifts and lowers the left weeding unit 45, and the right lifting and lowering unit 46 lifts and lowers the right weeding unit 45. That is, the work machine 400 (the weeder 402) includes a first work unit (the weeding unit 45 on the left side) located on one side of the work target row (the crop row Vr1) and a second work unit (the weeding unit 45 on the right side) located on the other side of the work target row. The first work unit (the weeding unit 45 on the right side) and the second work unit (the weeding unit 45 on the right side) are individually controllable to be lifted and lowered.

The weeder 402 is controlled by the control device 7 and is appropriately switched to four weeding patterns in total, i.e., a state in which the pair of weeding units 45 is in the extended posture, a state in which the pair of weeding units 45 is in the retracted posture, a state in which only the weeding unit 45 on the right side is in the retracted posture, and a state in which only the weeding unit 45 on the left side is in the retracted posture.

In addition, according to the present embodiment, the weeder 402 further includes a lifting and lowering operating unit 47 for manual operation. The lifting and lowering operating unit 47 is a device that is installed in the machine body 10 of the work vehicle 1 and is used to manually control the lifting and lowering unit 46. In the work vehicle 1, the control device 7 (the acquisition processing unit 71) acquires the operation signal output by the lifting and lowering operating unit 47 in response to the operation of the operator.

According to the present embodiment, the lifting and lowering operating unit 47 is provided at a rear end portion of the right side surface of the machine body 10 and is connected to the control device 7 of the work vehicle 1. Therefore, the operator can manually operate the lifting and lowering unit 46 with the lifting and lowering operating unit 47 without riding on the machine body 10 of the work vehicle 1, for example, in a state of standing on the right side of the machine body 10. Here, the lifting and lowering operating unit 47 allows the pair of lifting and lowering units 46 to be operated manually and individually. Therefore, the operator can lift and lower the weeding unit 45 on the left side by manually operating the lifting and lowering unit 46 on the left side with the lifting and lowering operating unit 47 and can lift and lower the weeding unit 45 on the right side by manually operating the lifting and lowering unit 46 on the right side with the lifting and lowering operating unit 47.

Furthermore, when the weeder 402 is attached as the work machine 400 to (the machine body 10 of) the work vehicle 1, the arrangement of various sensors of the obstacle detection device 62 is different from that when the spreader 401 is attached as the work machine 400 to the work vehicle 1. Specifically, when the weeder 402 is attached, the third sensor 625 and the fourth sensor 626 are provided at positions protruding rearward from the machine body 10 so as not to interfere with the weeding unit 45. Further, when the weeder 402 is attached, the rear contact sensor 628 may be omitted.

### [3] Method for Controlling Work Vehicle

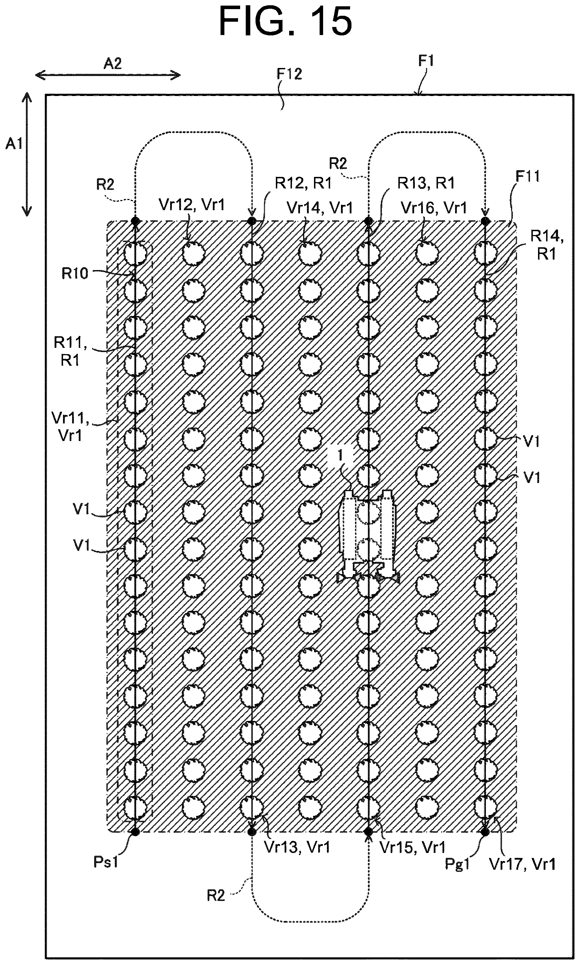

A method (hereinafter, simply referred to as the "control method") for controlling the work vehicle 1 executed mainly by the control device 7 will be described below with reference to FIGS. 15 to 27.

The control method according to the present embodiment is executed by the control device 7 having a computer system as the main configuration and, in other words, is embodied by a work vehicle control program (hereinafter, simply referred to as the "control program"). That is, the control program according to the present embodiment is a computer program to cause one or more processors to execute each processing related to the control method. For example, the control program above may be executed by the control device 7, the first operation terminal 210, and the like, in cooperation with each other.

As illustrated in FIG. 5, the control device 7, which executes the control method, forms a work vehicle control system (hereinafter, simply referred to as the "control system") 100. The control system 100 is a system that executes processing related to the control of the work vehicle 1 to which the work machine 400 is detachably attached. In other words, the control system 100 according to the present embodiment is used for controlling the work vehicle 1 to which the work machine 400 is attached and which performs work while moving in the field F1 (work site) where the plurality of crop rows Vr1 (work target rows) including the plurality of crops V1 (work objects) is arranged.

As described above, the control system 100 according to the present embodiment includes the control device 7 including the acquisition processing unit 71, the traveling processing unit 72, the spreading processing unit 73, the determination processing unit 74, the notification processing unit 75, the change processing unit 76, the selection processing unit 77, the selection restraint processing unit 78, the lifting and lowering processing unit 79, and the like. The control device 7 is mounted on the machine body 10 of the work vehicle 1 and is a part of the components of the work vehicle 1. Therefore, the control system 100 forms the work vehicle 1 together with the machine body 10. In other words, the work vehicle 1 according to the present embodiment includes the control system 100 and the machine body 10. The machine body 10 is configured to have the work machine 400 detachably attached thereto. That is, the machine body 10 is configured to allow the work machine 400 attached thereto.

### [3.1] Basic Action

First, the basic action performed when the traveling processing unit 72 executes the autonomous traveling processing and thus the work vehicle 1 autonomously travels in the field F1 as the work site will be described. Here, it is assumed that the spreader 401 is attached as the work machine 400 to the machine body 10 of the work vehicle 1 and the work vehicle 1 performs the spreading work.

The traveling processing unit 72 starts the autonomous travel of the work vehicle 1 when the acquisition processing unit 71 acquires the autonomous travel start instruction in a state where a predetermined autonomous travel condition is satisfied. Examples of the autonomous travel condition include that a target route R10 (see FIG. 15) is set, a key switch (engine key switch) for starting the engine (the power source 63) of the work vehicle 1 is in an ON state, and the work vehicle 1 is located at a work start position Ps1 (see FIG. 15). That is, the autonomous travel condition is satisfied when the work vehicle 1 is moved to the work start position Ps1 of the target route R10 by the manual operation of the manual operation device 8 in a state where the target route R10 is set and the engine is in operation. In this state, for example, when the operator operates the third operating portion 223 of the second operation terminal 220 and the second operation terminal 220 outputs an autonomous travel start instruction to the work vehicle 1, the traveling processing unit 72 starts the autonomous travel of the work vehicle 1.

Here, for example, as illustrated in FIG. 15, the field F1 in which the seven crop rows Vr11 to Vr17 are present is assumed as a work site. The field F1 includes a work area F11 (a hatched area in FIG. 15) where the crop rows Vr11 to Vr17 are formed and a non-work area F12 as a headland area formed around the work area F11 to surround the work area F11. The work area F11 is an area of the field F1 where the work vehicle 1 performs the work (here, spreading work). The non-work area F12 is an area where the work vehicle 1 does not perform the work (here, spreading work). That is, the work site (the field F1) includes the work area F11 where the work vehicle 1 performs the work and the non-work area F12 where the work vehicle 1 does not perform the work.

Further, the work vehicle 1 can autonomously travel (autonomically travel) in the field F1 along the previously set target route R10. For example, the work vehicle 1 autonomously travels from the work start position Ps1 to a work end position Pg1 along the target route R10 including a plurality of work routes R1 and a plurality of movement routes R2. Each of the plurality of work routes R1 is a linear route along which the work vehicle 1 performs the work (spreading work) on the crop V1, which is a work object (spread object), and each of the plurality of movement routes R2 is a route (non-work route) along which the work vehicle 1 moves between the crop rows Vr1 without performing the spreading work and may include a turning route and a straight route.

In the example of FIG. 15, the target route R10 includes four work routes R11 to R14 formed in the work area F11 along the longitudinal direction A1 which is the longitudinal direction of the crop row Vr1 (that is, the direction in which the plurality of crops V1 is arranged). Here, as an example, the work route R11 is set on the crop row Vr11, the work route R12 is set on the crop row Vr13, the work route R13 is set on the crop row Vr15, and the work route R14 is set on the crop row Vr17. The movement route R2 is formed to connect the work routes R11 to R14 adjacent to each other in the widthwise direction A2 in the non-work area F12 located on both sides in the longitudinal direction A1 when viewed from the work area F11. That is, basically, the work route R1 of the target route R10 is formed in the work area F11 of the work site (the field F1), and the movement route R2 is formed in the non-work area F12.

According to the target route R10 described above, the work vehicle 1 travels in the work area F11 from the work start position Ps1 toward one side (the upper side in FIG. 15) in the longitudinal direction A1 along the work route R11 and then travels in the non-work area F12 toward the start end of the subsequent work route R12 along the movement route R2. Then, the work vehicle 1 travels in the work area F11 toward the other side (the lower side in FIG. 15) in the longitudinal direction A1 along the work route R12 and then travels in the non-work area F12 toward the start end of the subsequent work route R13 along the movement route R2. Then, the work vehicle 1 travels in the work area F11 toward one side in the longitudinal direction A1 along the work route R13 and then travels in the non-work area F12 toward the start end of the subsequent work route R14 along the movement route R2. Finally, the work vehicle 1 travels in the work area F11 to the work end position Pg1 toward the other side in the longitudinal direction A1 along the work route R14.

Here, it is assumed that the current position of the work vehicle 1 is specified based on the position of the antenna 21 provided at the center in the right-left direction D2 in the rear portion of the machine body 10 in a plan view. Therefore, when the work vehicle 1 autonomously travels along the target route R10, the center in the right-left direction D2 in the rear portion of the machine body 10 passes above the target route R10. Further, as described above, while traveling in a posture straddling the one crop row Vr1 with the gate-shaped machine body 10, the work vehicle 1 spreads the spread material (medicinal solution) from the spreader 401 to the crop V1 of the crop row Vr1 and the crop V1 of the crop row Vr1 adjacent to the crop row Vr1. The current position of the work vehicle 1 may be specified from the position of the antenna 22 provided in the front portion of the machine body 10 or may be specified from the positions of both the antennas 21 and 22.

Therefore, for example, as illustrated in FIG. 15, the machine body 10 travels by straddling the crop row Vr15 while the work vehicle 1 travels on the work route R13 set on the crop row Vr15. At this time, the first block 10L travels on the work path between the crop row Vr14 and the crop row Vr15, and the second block 10R travels on the work path between the crop row Vr15 and the crop row Vr16. Further, at this time, the work vehicle 1 can simultaneously spread the spread material (medicinal solution) to the crop V1 of the crop row Vr15, the crop V1 of the crop row Vr14 located on the left side, and the crop V1 of the crop row Vr16 located on the right side.

Further, the work vehicle 1 autonomously travels in a predetermined row order. In the example of FIG. 15, the work routes R1 are set in every other row in the arrangement order of the crop rows Vr1, i.e., the crop rows Vr11, Vr13, Vr15, and Vr17. Therefore, the work vehicle 1 autonomously travels in every other row of the plurality of crop rows Vr1. The work vehicle 1 simultaneously spreads the spread material (medicinal solution) to the spread objects (the crops V1) in three rows adjacent to one another in the widthwise direction A2 while traveling in every other row of the plurality of crop rows Vr1, thereby enabling the spreading work on all of the spread objects. However, such setting of the work route R1 is merely an example, and the work vehicle 1 may travel in every other row in the arrangement order of the crop rows Vr1, or may travel in every several rows.

Here, the work vehicle 1 performs the spreading work while traveling on the work route R1 and does not perform the spreading work while traveling on the movement route R2. Therefore, the work vehicle 1 starts the spreading work when starting to travel on the work route R1 and stops the spreading work when traveling to the terminal end of the work route R1. Then, the work vehicle 1 travels on the movement route R2 in a state where the spreading work has stopped and resumes the spreading work when reaching the start end of the subsequent work route R1. Thus, the work vehicle 1 performs the spreading work while traveling in the work area F11 and does not perform the spreading work while traveling in the non-work area F12.

In the example of FIG. 15, the movement route R2 includes a turning route for a right turn or a left turn in a gradual turn, but the turning mode for changing the orientation of the work vehicle 1 is not limited to "gradual turn", and may include, for example, "skid turn", "neutral turn", and the like. Furthermore, the turning mode of the work vehicle 1 may include a turning mode in which the machine body 10 is turned while switching between forward movement and backward movement in order to enable the machine body 10 to turn in a limited space, such as what is called "fish tail turn".

Further, the target route R10 is generated based on information such as work vehicle information about the work vehicle 1, field information about the field F1, and work information about work (here, spreading work). The work vehicle information includes, for example, information such as the model of the work vehicle 1, the position of the antenna 21 of the work vehicle 1, the type of the work machine 400 (here, the spreader 401), the size and the shape of the work machine 400, the position of the work machine 400 with respect to the machine body 10, and the vehicle speed and the engine speed of the machine body 10 during work. The field information includes information such as the position and the shape of the field F1, the work start position Ps1, the work end position Pg1, and the working direction. The term "working direction" described here means the direction in which the work vehicle 1 travels while performing the spreading work in the work area F11 that is an area obtained by excluding the non-work area F12 such as a headland from the field F1. The work information includes information such as the number of skips, which is the number of work routes R1 to be skipped when the work vehicle 1 turns in the non-work area F12, and the width of the non-work area F12.

For example, the operator may manually set the work vehicle information, the field information, the work information, and the like, by performing a registration operation on the first operation terminal 210. Alternatively, for example, the information such as the position and the shape of the field F1 may be automatically acquired when the operator manually operates the work vehicle 1 to travel one round along the outer periphery of the field F1 and records the transition of the position information of the antenna 21 at that time.

The generated target route R10 is stored in a memory (storage unit) of the control device of the work vehicle 1 and is used for autonomous travel by the traveling processing unit 72. The target route R10 can also be displayed on the display unit 211 or the like of the first operation terminal 210.

### [3.2] Action During Replacing Work Machine

Next, an action of the control system 100 (mainly, the control device 7) accompanied with the replacement of the work machine 400 attached to (the machine body 10 of) the work vehicle 1 will be described. That is, as the spreader 401 or the weeder 402 is attached as the work machine 400 to the machine body 10 of the work vehicle 1, the work machine 400 is replaced for the machine body 10 depending on the work (spreading work or weeding work) to be executed by the work vehicle 1. Replacement of the work machine 400 is manually performed by a person (for example, an operator).

First, according to the present embodiment, the determination processing unit 74 of the control device 7 has a function to identify the attached work machine 400. Specifically, the determination processing unit 74 uses, for example, an electric signal (or a voltage value or the like) to identify the type of the work machine 400 attached to the machine body 10. According to the present embodiment, since the spreader 401 or the weeder 402 is attached as the work machine 400, the determination processing unit 74 can identify at least which of the spreader 401 and the weeder 402 is attached as the work machine 400, that is, the type of the attached work machine 400. Thus, when the work machine 400 is replaced, the determination processing unit 74 can automatically identify the replaced work machine 400 (i.e., the currently attached work machine 400).

The determination processing unit 74 stores the information about the identified work machine 400 in the storage unit (memory). Here, the information about the work machine 400 may include at least one piece of information such as the identification information (serial number or the like) unique to the work machine 400, the model, the size, the shape, and the position of the work machine 400 with respect to the machine body 10, in addition to the type of the work machine 400 (the spreader 401 or the weeder 402).

Furthermore, according to the present embodiment, the determination processing unit 74 determines a match/mismatch between the first information about the first work machine attached to the work vehicle 1 as the work machine 400 at the first time point in the past and the second information about the second work machine attached to the work vehicle 1 as the work machine 400 at the current time point. That is, the determination processing unit 74 compares the information (the first information) of the work machine 400 (the first work machine) identified as being attached to the work vehicle 1 at the first time point in the past with the information (the second information) of the work machine 400 (the second work machine) identified as being attached as the work machine 400 to the work vehicle 1 at the current time point. Then, the determination processing unit 74 determines whether the first information and the second information match with each other.

Specifically, the determination processing unit 74 sets the information of the work machine 400 identified and stored in the storage unit at the time of the previous use of the work vehicle 1 as the first information, sets the information of the work machine 400 identified as being currently attached to the work vehicle 1 as the second information, and compares the first information with the second information. When the attached work machine 400 is the same at the first time point (for example, at the time of the previous use of the work vehicle 1) and the current time point, the first information and the second information match with each other, and when the attached work machine 400 is different, the first information and the second information do not match with each other. In other words, the determination processing unit 74 determines that the first information and the second information do not match with each other when the work machine 400 is replaced between the first time point (for example, the time of the previous use of the work vehicle 1) and the current time point.

Then, the notification processing unit 75 notifies the determination result of a match/mismatch between the first information and the second information performed by the determination processing unit 74. The "notification" here means notifying a person (an operator or the like) by an appropriate method. That is, the notification processing unit 75 notifies the operator or the like of the determination result of a match/mismatch between the first information and the second information by an appropriate method.

With the configuration described above, when the work machine 400 attached to the work vehicle 1 is replaced with the different work machine 400, it is easy to avoid the operator from performing work without noticing that the work machine 400 has been replaced. Therefore, there is an advantage that various adjustments and the like corresponding to the work machine 400 after the replacement are easily performed, and the appropriate work is easily performed by the work vehicle 1.

Moreover, according to the present embodiment, the determination processing unit 74 determines a match/mismatch between the first information and the second information for each type of the work machine 400. That is, as long as the type of the work machine 400 matches between the first information and the second information, the determination processing unit 74 determines that the first information and the second information match with each other even when other information (for example, the identification information unique to the work machine 400) is different. Conversely, when the type of the work machine 400 does not match between the first information and the second information, the determination processing unit 74 determines that the first information and the second information do not match with each other, regardless of the other information. Thus, for example, when the work machine 400 is replaced with the work machine 400 of the same type due to a failure or the like, the first information and the second information match with each other, and it is possible to avoid an improper determination that the work machine 400 has been replaced.

Furthermore, according to the present embodiment, the determination processing unit 74 identifies the type of the work machine 400 attached to the work vehicle 1. That is, the type of the work machine 400 is automatically identified. Therefore, for example, it is possible to save time and effort for an operator or the like to manually input the type of the work machine 400, and it is possible to avoid an improper determination due to input omission by the operator or the like.

In addition, the determination processing unit 74 identifies the first information and the second information at the timing when a specific condition related to the action of the work vehicle 1 is satisfied. The "specific condition" described here is, for example, various conditions set in relation to the action of the work vehicle 1, such that the power of at least one of the work vehicle 1 and the first operation terminal 210 is turned on. Thus, for example, the first information and the second information are identified at appropriate timing, such as when the power of both the work vehicle 1 and the first operation terminal 210 is turned on, and it is possible to determine a match/mismatch between the first information and the second information at this time point.

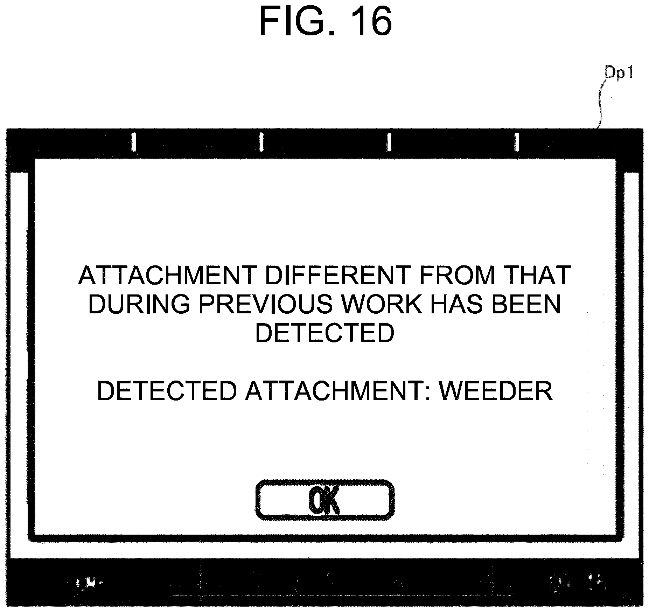

More specifically, according to the present embodiment, as illustrated in FIG. 16, the notification processing unit 75 notifies the determination result of the determination processing unit 74 by pop-up display on a display screen (a start screen Dp1) displayed on the display unit 211 of the first operation terminal 210. The start screen Dp1 illustrated in FIG. 16 is a screen that is initially displayed on the display unit 211 of the first operation terminal 210 when the power of both the work vehicle 1 and the first operation terminal 210 is turned on.

The example of FIG. 16 assumes a situation in which the spreader 401 was attached at the time of the previous work (the first time point), but the work machine 400 has been replaced with the weeder 402 at the time of the current work (the current time point). In this case, since the first information about the first work machine (here, the spreader 401) and the second information about the second work machine (here, the weeder 402) do not match with each other, the start screen Dp1 displays the message indicating that the first information and the second information do not match with each other, for example, "Attachment different from that during the previous work has been detected".

Further, the start screen Dp1 displays, for example, the message identifying the currently attached work machine 400 (here, the weeder 402), such as "Detected attachment: weeder". In short, according to the present embodiment, the result of the determination is notified by the display of the display screen (the start screen Dp1). The display screen (the start screen Dp1) includes at least information about the second work machine. Thus, the operator can visually recognize the information about the work machine 400 (the second work machine) attached at the current time point together with the determination result of the match/mismatch between the first information and the second information.

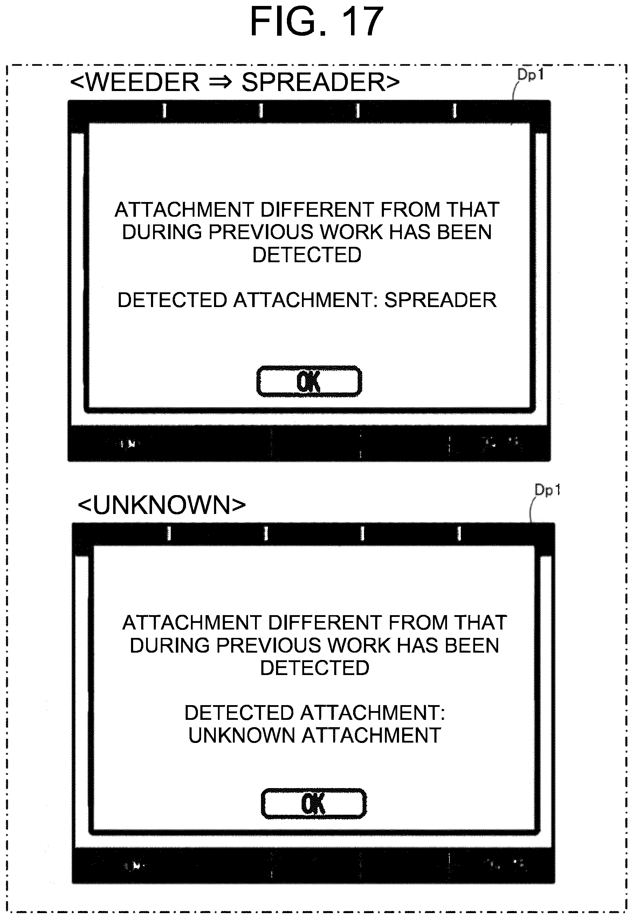

The upper section of FIG. 17 illustrates the start screen Dp1 in a case where the weeder 402 was attached at the time of the previous work (the first time point), but the work machine 400 has been replaced with the spreader 401 at the time of the current work (the current time point). The lower section of FIG. 17 illustrates the start screen Dp1 in a case where the spreader 401 was attached at the time of the previous work (the first time point), but has been replaced with the undefined (unregistered) work machine 400 at the time of the current work (the current time point). That is, the determination processing unit 74 also determines that the first information and the second information do not match with each other when the work machine 400 has been replaced with the undefined work machine 400. However, in this case, the message such as "Unknown attachment" is displayed, which indicates that the work machine 400 (the second work machine) attached at the current time point is undefined. In this case, in the subsequent display screen and vehicle control, it is regarded that the default work machine is attached, and an inappropriate display and an unintended action are prevented from occurring.

Conversely, in a case where the replacement of the work machine 400 has not been performed, for example, in a case where the spreader 401 was attached at the time of the previous work (the first time point) but the spreader 401 is also attached at the time of the current work (the current time point), it is preferable to notify the fact. That is, when the first information about the first work machine and the second information about the second work machine match with each other, the start screen Dp1 displays the message such as "The same attachment as that at the time of the previous work has been detected", which indicates that the first information and the second information match with each other.

In this way, according to the present embodiment, as a result of the determination, it is possible to notify that at least the first information and the second information match with each other. This makes it easy for the operator to recognize a match/mismatch between the first information and the second information.

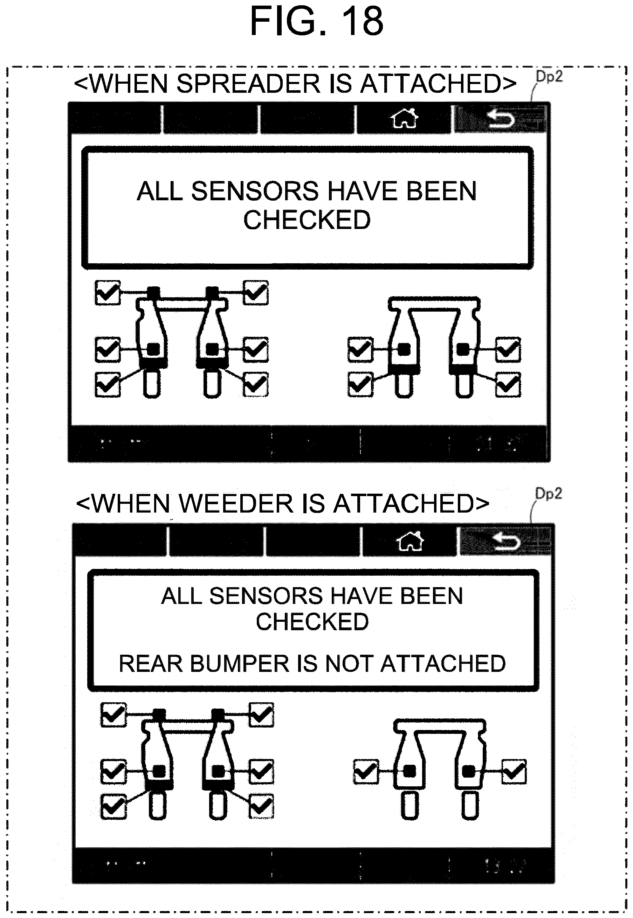

According to the present embodiment, as described above, the arrangement of the various sensors of the obstacle detection device 62 varies depending on the type of the work machine 400 (the spreader 401 or the weeder 402) attached to (the machine body 10 of) the work vehicle 1. Therefore, according to the present embodiment, on a sensor check screen Dp2 (see FIG. 18), an item related to a sensor that becomes unnecessary due to the currently attached work machine 400 is automatically hidden.

Specifically, in a case where the work vehicle 1 is caused to autonomously travel, action confirmation of various sensors of the obstacle detection device 62 is performed as advance preparation. When confirming the action of the sensor, the operator causes the display unit 211 of the first operation terminal 210 to display the sensor check screen Dp2 illustrated in FIG. 18 and confirms the actions of the various sensors on the sensor check screen Dp2.

The upper section of FIG. 18 illustrates the sensor check screen Dp2 when the spreader 401 is attached as the work machine 400. The sensor check screen Dp2 displays the check boxes corresponding to the respective various sensors (the first detection unit 621, the second detection unit 622, the first sensor 623 to the fourth sensor 626, the front contact sensor 627, and the rear contact sensor 628) in addition to the images resembling the work vehicle 1 in a front view and a rear view. The control device 7 performs a test action of the various sensors of the obstacle detection device 62 and checks the check box corresponding to the sensor that is confirmed to act normally. In the example of FIG. 18, the message such as "All sensors have been checked" is displayed, which indicates that it is confirmed that all the sensors of the obstacle detection device 62 operate normally.

Conversely, the lower section of FIG. 18 illustrates the sensor check screen Dp2 when the weeder 402 is attached as the work machine 400. The sensor check screen Dp2 displays the check boxes corresponding to the respective various sensors (the first detection unit 621, the second detection unit 622, the first sensor 623 to the fourth sensor 626, and the front contact sensor 627) in addition to the images resembling the work vehicle 1 in a front view and a rear view. Here, since the rear contact sensor 628 is removed when the weeder 402 is attached, the check box corresponding to the rear contact sensor 628 is hidden on the sensor check screen Dp2.

The control device 7 performs a test action of various sensors of the obstacle detection device 62 and checks the check box corresponding to the sensor that is confirmed to act normally. In the example of the lower section of FIG. 18, in addition to the message "All sensors have been checked", the message such as "The rear bumper is not attached" is displayed, which indicates that the rear contact sensor 628 is not attached.

As described above, the sensors (the first detection unit 621, the second detection unit 622, the first sensor 623 to the fourth sensor 626, the front contact sensor 627, the rear contact sensor 628, and the like) is attachable to the work vehicle 1 in accordance with the type of the work machine 400. Then, the notification processing unit 75 notifies the attachment state of the sensor corresponding to the type of the work machine 400. In short, for example, on the sensor check screen Dp2, the display of the sensor to be checked is switched in accordance with the type of the attached work machine 400, and thus the attachment state of the sensor corresponding to the type of the work machine 400 is notified. Accordingly, it is possible to prevent the operator from performing an action check on a sensor that is not originally necessary.

Further, according to the present embodiment, when the attachment state of the sensor does not correspond to the type of the work machine 400, the notification processing unit 75 notifies the sensor setting information related to the setting of the sensor in addition to the notification of the attachment state of the sensor. For example, when the rear contact sensor 628 remains detached in a state where the spreader 401 is attached as the work machine 400, the notification processing unit 75 displays the message such as "Please attach the rear bumper" indicating the sensor setting information related to the setting of the rear contact sensor 628 on the sensor check screen Dp2. This makes it possible to prompt the operator to correctly mount the sensor, for example, in a case where the necessary sensor replacement, or the like, accompanied with the replacement of the work machine 400 is not performed.

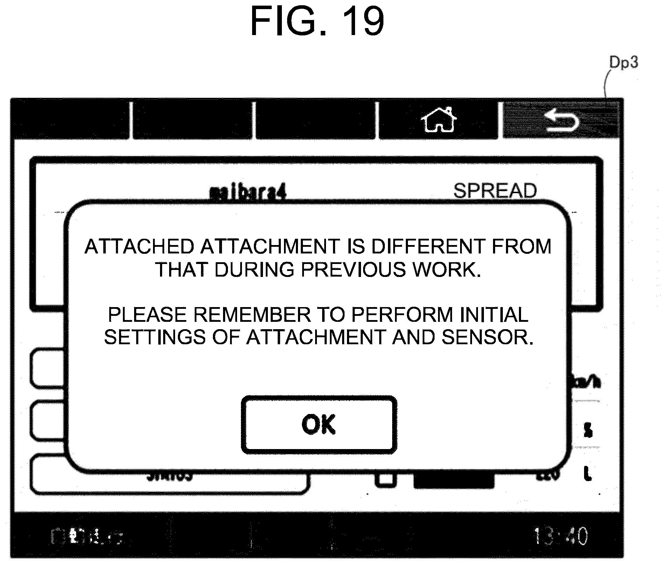

Further, according to the present embodiment, when the first information and the second information do not match with each other, the notification processing unit 75 notifies the setting information related to the setting of at least one of the work vehicle 1 and the work machine 400 in addition to the notification of the result of the determination. For example, when the first information and the second information do not match with each other, a preparation screen Dp3 or the like illustrated in FIG. 19 displays a message such as "Attached attachment is different from that during the previous work" or "Please remember to perform initial settings of the attachment and the sensor" prompting the settings of the work machine 400 (attachment) and (a sensor of) the work vehicle 1. The preparation screen Dp3 is a screen that is always displayed on the display unit 211 of the first operation terminal 210 when the work vehicle 1 is caused to autonomously travel, and various settings and confirmations are performed on the preparation screen Dp3.

Accordingly, in a case where the work machine 400 has been replaced since the previous work, the settings of the work vehicle 1 and the work machine 400 are prompted so that the operator can easily perform the necessary settings (adjustment) accompanied with the replacement of the work machine 400 without forgetting. For example, when the spreader 401 is attached, the spread amount is not appropriate unless the initial settings (adjustment) such as the pressure is performed before the work, and when the weeder 402 is attached, the lifting and lowering action of the weeding unit 45 by the lifting and lowering unit 46 cannot be correctly performed unless the initial settings (adjustment) of the lift angle sensor of the lifting and lowering unit 46 is performed. As described above, the operator reliably performs the necessary initial settings, and thus it is possible to realize the proper action of the work vehicle 1.

The items that need the initial settings (adjustment) for the work machine 400 include, for example, the spread flow rate adjustment, return valve adjustment, action check of each actuator related to spreading, and nozzle direction adjustment in the case of the spreader 401 and the highest/lowest position adjustment of the lift angle sensor (potentiometer), action check of the lifting and lowering unit 46, and height adjustment of the cultivator 451 and the wheel 453 in the case of the weeder 402. Therefore, the notification processing unit 75 may notify, as the setting information, what is to be specifically adjusted as the initial setting in accordance with the currently attached work machine 400.

Further, according to the present embodiment, the notification processing unit 75 notifies the information about at least one of the timing and the content of the work performed by the work vehicle 1 at the first time point. The "timing of the work" described here includes at least one of the season, year, date, time, and the like, in which the work is performed. The "content of the work" described here includes at least one of the type of work (spreading work, inter-plant weeding, inter-row weeding, or the like), the range (location) in which the work was performed, the worker (operator), and the like. The information about at least one of the timing and the content of the work performed by the work vehicle 1 at the first time point is notified by being displayed on, for example, the start screen Dp1 or the preparation screen Dp3. Thus, the operator can check the information about the timing and/or the content of the previous (first time point) work, and the convenience is improved.

### [3.3] Route Selection of Autonomous Travel

Next, an action of the control system 100 (mainly, the control device 7) related to the selection of a route (the target route R10) for the work vehicle 1 to autonomously travel will be described.

According to the present embodiment, as a premise, the route (the target route R10) for causing the work vehicle 1 to autonomously travel is set for each of the fields F1 and for each work. Specifically, even when the field F1 is the same, a different route is generated as the target route R10 depending on the type of work, for example, spreading work, inter-plant weeding, or inter-row weeding. Since the attached work machine 400 varies depending on the work, the target route R10 is set in association with at least the work machine 400.

The traveling processing unit 72 of the control device 7 causes the work vehicle 1 to autonomously travel based on the autonomous travel information including the target route R10 set in association with the work machine 400 as described above. According to the present embodiment, before the work vehicle 1 is caused to autonomously travel, the operator is caused to designate which of the target routes R10 the work vehicle 1 is caused to autonomously travel along.

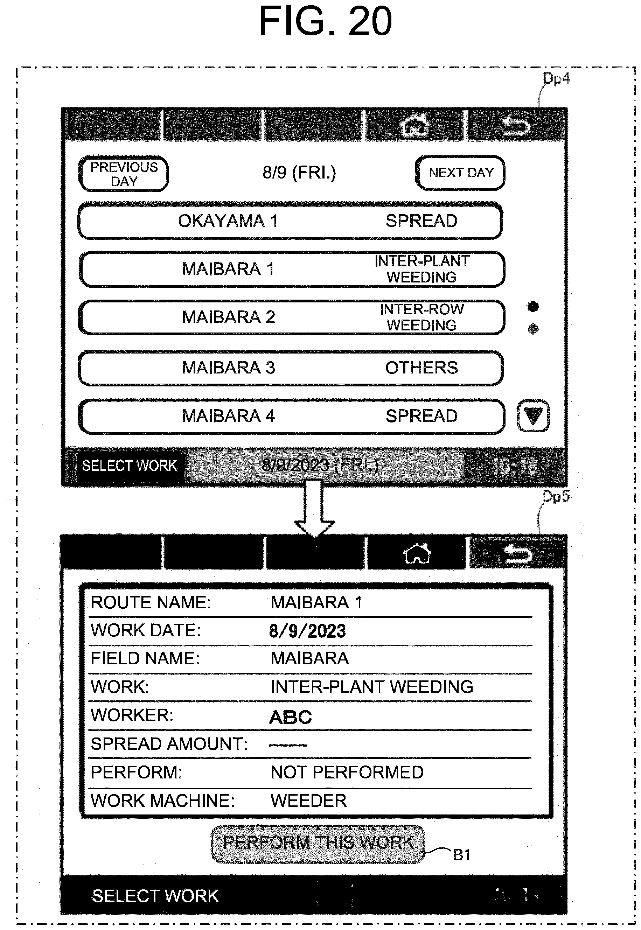

Specifically, as illustrated in the upper section of FIG. 20, the selection processing unit 77 of the control device 7 causes the display unit 211 of the first operation terminal 210 to display the selection screen Dp4. The selection screen Dp4 is a screen that displays a list of a plurality of pieces of candidate information each including autonomous travel information and allows the operator to select arbitrary candidate information from the plurality of pieces of candidate information. In the example of FIG. 20, the selection screen Dp4 displays a plurality of pieces of candidate information including "Okayama 1", "Maibara 1", "Maibara 2", "Maibara 3", and "Maibara 4". In this case, it is assumed that the spreader 401 is attached as the work machine 400.

In the selection screen Dp4, for example, when the operator selects "Maibara 1" in which the work is "inter-plant weeding", the selection processing unit 77 causes the display unit 211 of the first operation terminal 210 to display a selection confirmation screen Dp5 as illustrated in the lower section of FIG. 20. The selection confirmation screen Dp5 is a screen that displays the details of the selected candidate information. On the selection confirmation screen Dp5, when a confirmation button B1 described as "Perform this work" is operated, the selection processing unit 77 sets (selects) the candidate information (Maibara 1) selected on the selection screen Dp4 as the autonomous travel information.

However, in the example of FIG. 20, the candidate information of "Maibara 1" corresponding to the weeder 402 is selected in a state where the spreader 401 is attached as the work machine 400. Therefore, the selection restraint processing unit 78 restrains the selection of the candidate information (Maibara 1). To be specific, the selection restraint processing unit 78 makes the confirmation button B1 inoperable by making the confirmation button B1 inactive (for example, gray-out) on the selection confirmation screen Dp5 in the lower section of FIG. 20. Accordingly, since the operator cannot operate the confirmation button B1 on the selection confirmation screen Dp5, the selection processing unit 77 cannot set (select) the candidate information (Maibara 1) selected on the selection screen Dp4 as the autonomous travel information. As a result, the selection restraint processing unit 78 restrains the selection of the candidate information (non-corresponding information) that does not correspond to the attached work machine 400 (here, the spreader 401).

As described above, the control method according to the present embodiment includes causing the work vehicle 1 to autonomously travel based on the autonomous travel information set in association with the work machine 400 and causing the user to select the autonomous travel information from a plurality of pieces of candidate information. The control method further includes restraining the selection of non-corresponding information that does not correspond to the type of the work machine 400 attached to the work vehicle 1 among the plurality of pieces of candidate information. According to the present embodiment, as described above, the determination processing unit 74 automatically identifies the work machine 400 attached to the work vehicle 1.

With this configuration, it is easy to avoid improper selection of the non-corresponding information that does not correspond to the type of the work machine 400 attached to the work vehicle 1. Then, although it is necessary to cause the work vehicle 1 to autonomously travel in accordance with the autonomous travel information corresponding to the work machine 400 attached to the work vehicle 1, it is easy to avoid the autonomous travel in a state where the autonomous travel information (non-corresponding information) that does not correspond to the work machine 400 is improperly selected. As a result, there is an advantage that it is easy to perform more appropriate work.

According to the present embodiment, the autonomous travel information includes the target route R10. That is, it is easy to avoid the selection of the target route R10 that does not correspond to the work machine 400 attached to the work vehicle 1.

Further, according to the present embodiment, the selection processing unit 77 displays the plurality of pieces of candidate information on the selection screen Dp4 when the autonomous travel information is selected. Here, the selection screen Dp4 includes the non-corresponding information. That is, on the selection screen Dp4 illustrated in the upper section of FIG. 20, not only the autonomous travel information corresponding to the type of the work machine 400 attached to the work vehicle 1 but also the autonomous travel information (non-corresponding information) that does not correspond to the type of the work machine 400 are displayed in a list. To be specific, in the example of FIG. 20, on the selection screen Dp4, regardless of the attached work machine 400, all the autonomous travel information for the work scheduled on the day (for example, August 9) is displayed, and all the work names and the work types (the spreading work, the inter-plant weeding, or the inter-row weeding) are displayed like a work list. Therefore, the operator can confirm all the works scheduled on the day and the necessity of replacement of the work machine 400.

Further, in the control method according to the present embodiment, the type of the work machine 400 corresponding to the selected autonomous travel information is presented. Specifically, on the selection confirmation screen Dp5 illustrated in the lower section of FIG. 20, the type (here, "weeder") of the work machine 400 corresponding to the selected autonomous travel information (here, "Maibara 1") is displayed. Thus, the operator can confirm the necessity of replacement of the work machine 400.

Further, when the selection of the non-corresponding information is restrained, the selection restraint processing unit 78 may notify that the non-corresponding information does not correspond to the type of the work machine 400 attached to the work vehicle 1. As an example, not only the confirmation button B1 is made inoperable (inactive) on the selection confirmation screen Dp5, but also the selection confirmation screen Dp5 displays a message such as "The work does not correspond to the attached work machine", which indicates that the candidate information (non-corresponding information) that does not correspond to the type of the attached work machine 400 is about to be selected. Thus, not only the selection of the non-corresponding information is restrained, but also the operator can know the reason why the selection of the non-corresponding information is restrained (the non-corresponding information does not correspond to the type of the attached work machine 400), so that the operator can confirm the necessity of replacement of the work machine 400.

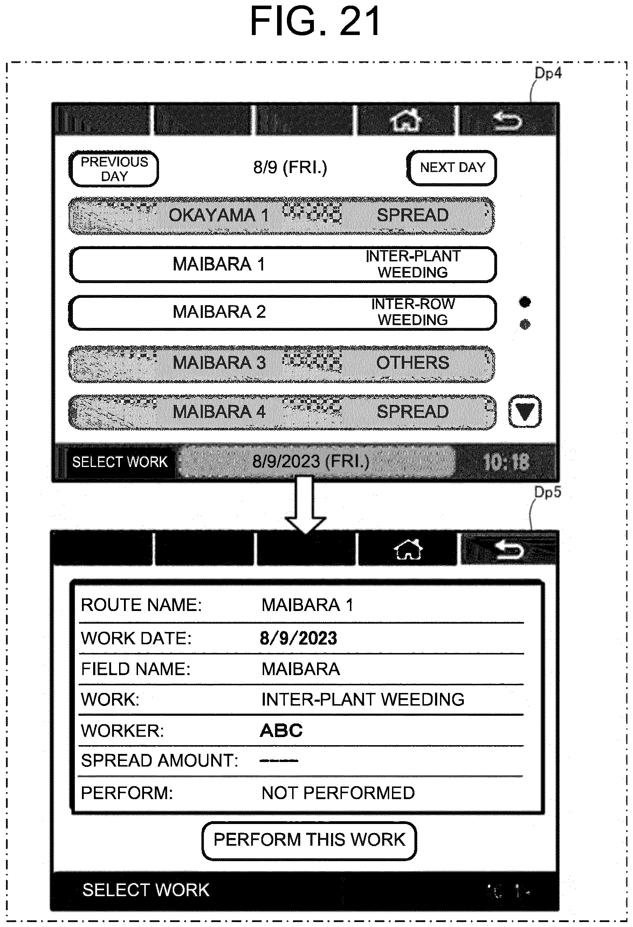

In addition, the mode in which the selection restraint processing unit 78 restrains the selection of the candidate information (non-corresponding information) that does not correspond to the attached work machine 400 (here, the spreader 401) is not limited to the above-described mode. For example, as illustrated in the upper section of FIG. 21, the selection restraint processing unit 78 may make the candidate information that does not correspond to the type of the attached work machine 400 inactive (for example, gray-out) on the selection screen Dp4 to make the operation impossible. In the example of FIG. 21, it is assumed that the weeder 402 is attached as the work machine 400, and "Okayama 1", "Maibara 3", and "Maibara 4", which are the candidate information for the work (spreading or others) that does not correspond to the weeder 402, are inactive. In this case, since only the candidate information corresponding to the type of the attached work machine 400 is selected in the first place, the confirmation button B1 is active on the selection confirmation screen Dp5 so that the confirmation button B1 can be operated, as illustrated in the lower section of FIG. 21.

In a case where the work machine 400 attached to the work vehicle 1 is replaced between the selection of the autonomous travel information and the start of the autonomous travel, the selection restraint processing unit 78 restrains the start of the autonomous travel when the type of the work machine 400 after the replacement does not correspond to the selected autonomous travel information. According to the present embodiment, as described above, when the work machine 400 is replaced, the determination processing unit 74 automatically identifies the work machine 400 after the replacement (that is, the currently attached work machine 400).

In short, when the work machine 400 is replaced after the autonomous travel information corresponding to the attached work machine 400 is selected, the autonomous travel information such as the target route R10 has already been selected, and therefore the selection restraint processing unit 78 restrains the start of the autonomous travel instead of restraining the selection of the autonomous travel information. This makes it easier to avoid the work vehicle 1 from starting the autonomous travel based on the autonomous travel information that does not correspond to the attached work machine 400.

That is, after the autonomous travel information is selected, the autonomous travel information (the target route R10 and the like) is read by the work vehicle 1 and even when the power of the work vehicle 1 is turned off, the autonomous travel information is held (so that the work can be interrupted/resumed). Therefore, the work machine 400 is sometimes replaced in a state where the power of the work vehicle 1 is off, but even in such a case, it is possible to avoid the work vehicle 1 from starting the autonomous travel based on the autonomous travel information that does not correspond to the attached work machine 400.

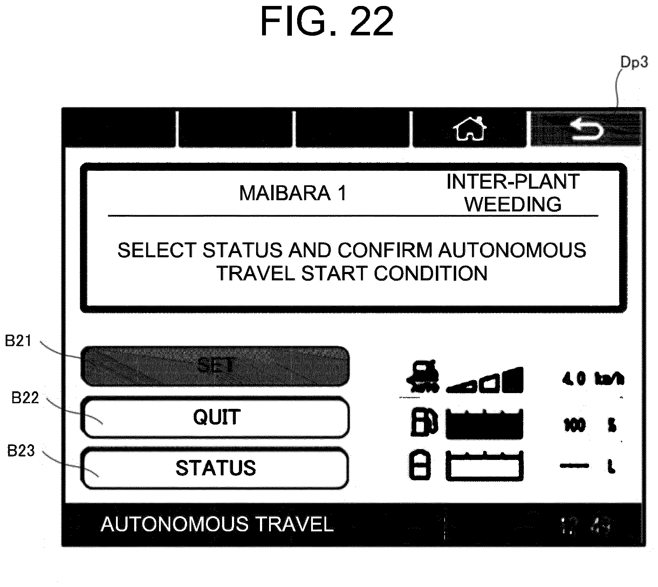

For example, as illustrated in FIG. 22, the selection restraint processing unit 78 restrains the start of the autonomous travel on the preparation screen Dp3 displayed on the display unit 211 of the first operation terminal 210. Specifically, the preparation screen Dp3 is a screen displayed before the start of the autonomous travel. When a start button B21 described as "SET" is operated on the preparation screen Dp3, the traveling processing unit 72 starts the autonomous travel.

However, in the example of FIG. 22, in a state where the autonomous travel information of "Maibara 1" corresponding to the weeder 402 is selected, the work machine 400 has been replaced with the spreader 401. Therefore, the selection restraint processing unit 78 makes the start button B21 inactive (for example, gray-out) on the preparation screen Dp3 so that the start button B21 is inoperable. Thus, since the operator cannot operate the start button B21 on the preparation screen Dp3, the traveling processing unit 72 cannot start the autonomous travel of the work vehicle 1. As a result, the selection restraint processing unit 78 restrains the start of the autonomous travel based on the autonomous travel information that does not correspond to the attached work machine 400 (here, the spreader 401).

In this way, even in a case where the work machine 400 is replaced after the autonomous travel information is selected, the autonomous travel information selected at that point is not cancelled, and the start of the autonomous travel is only prevented, and therefore, for example, the autonomous travel can be started by placing the work machine 400 back. Alternatively, it is also possible to cancel the selected autonomous travel information and reselect the autonomous travel information corresponding to the attached work machine 400 by the operation of the operator.

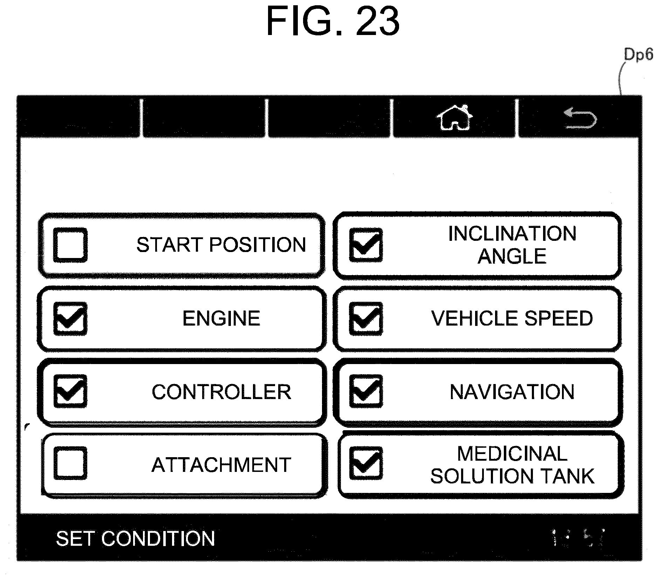

Further, when a status button B23 described as "STATUS" is operated on the preparation screen Dp3 illustrated in FIG. 22, a status screen Dp6 illustrated in FIG. 23 is displayed on the display unit 211 of the first operation terminal 210. On the status screen Dp6, since the "attachment" field indicating the work machine 400 attached to the machine body 10 is not checked, it is clearly indicated that the work machine 400 (attachment) that does not correspond to the selected autonomous travel information is attached.

In this way, when the start of the autonomous travel is restrained, the selection restraint processing unit 78 notifies that the autonomous travel information does not correspond to the type of the work machine 400 attached to the work vehicle 1. Thus, the operator can confirm the reason why the autonomous travel cannot be started. Then, in this state (a state where the start of the autonomous travel is restrained), the operator replaces the work machine 400 attached to the work vehicle 1 with the appropriate work machine 400 and thus can start the autonomous travel.

Alternatively, on the preparation screen Dp3 illustrated in FIG. 22, by operating a cancel button B22 described as "QUIT", the operator can cancel the selected autonomous travel information and reselect the autonomous travel information corresponding to the attached work machine 400. That is, in a case where the start of the autonomous travel is restrained, the selection processing unit 77 causes the user (operator) to select the autonomous travel information again from the plurality of pieces of candidate information. Thus, the autonomous travel can be started without further replacement of the work machine 400.

In addition, here, the autonomous travel information includes the target route R10, but the autonomous travel information may include, for example, the vehicle speed, the maximum vehicle speed, the minimum vehicle speed, the work start position Ps1, the work end position Pg1, or the like, of the work vehicle 1 in addition to or instead of the target route R10.

### [3.4] Various Settings During Autonomous Travel

Next, an action of the control system 100 (mainly the control device 7) related to various settings during the autonomous travel of the work vehicle 1 will be described.

According to the present embodiment, various settings related to the action (obstacle detection action and the like) of the work vehicle 1 during autonomous travel have different optimum values depending on the state of the work machine 400. Therefore, the change processing unit 76 according to the present embodiment changes the setting item related to the autonomous travel of the work vehicle 1 in accordance with the state of the work machine 400 attached to the work vehicle 1. The "state" of the work machine 400 described here includes the type of the work machine 400 (the spreader 401 or the weeder 402) and/or the posture of the work machine 400 (the extended posture or the retracted posture in the case of the weeder 402).

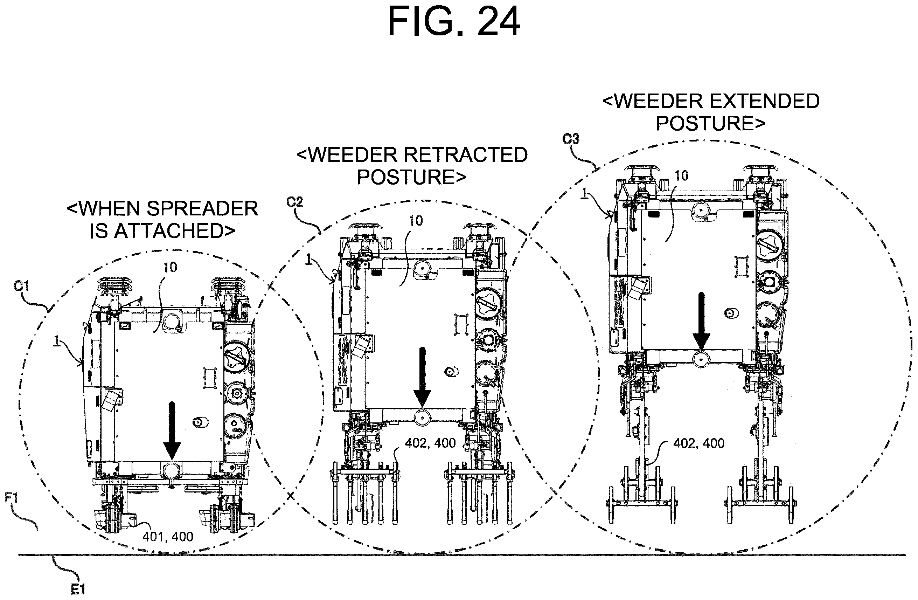

To be specific, as illustrated in FIG. 24, field deviation determination ranges C1, C2, and C3 of the autonomously traveling work vehicle 1 are different depending on the state of the work machine 400 attached to (the machine body 10 of) the work vehicle 1. The field deviation determination ranges C1, C2, and C3 are ranges set based on the outer shape of the machine body 10 in a plan view in order to determine the deviation of the work vehicle 1 from the field F1. According to the present embodiment, as an example, the field deviation determination ranges C1, C2, and C3 are circular ranges one size larger than a circumscribed circle passing through the four corners of the machine body 10 in a plan view. FIG. 24 is a schematic plan view illustrating the automatic stop positions at a field end E1 (i.e., the boundary between the inside of the field F1 and the outside of the field F1) during backward movement in each of the case where the spreader 401 is attached, the case where the weeder 402 is attached and the weeder 402 is in the retracted posture, and the case where the weeder 402 is attached and the weeder 402 is in the extended posture.

For example, since the rear end position of the work machine 400 when the weeder 402 is attached is shifted backward as viewed from the machine body 10 as compared to when the spreader 401 is attached, the work machine 400 protrudes from the field end E1 during the backward movement of the work vehicle 1 when the weeder 402 is attached in the same field deviation determination range C1 as that when the spreader 401 is attached. Therefore, when the weeder 402 is attached, the larger field deviation determination range C2 than that when the spreader 401 is attached is adopted so that the work machine 400 is prevented from protruding from the field end E1 during the backward movement of the work vehicle 1.

Further, when the weeder 402 is attached, the weeder 402 is lifted and lowered by the lifting and lowering unit 46 during the autonomous travel, and the retracted posture and the extended posture of the weeder 402 are switched at any time. When the weeder 402 is in the extended posture, the rear end position of the work machine 400 is shifted backward as compared with that in the retracted posture. Therefore, by adopting the larger field deviation determination range C3 in the extended posture than that in the retracted posture, the work machine 400 is prevented from protruding from the field end E1 during backward movement of the work vehicle 1. Specifically, in response to the work instruction associated with the target route R10, the field deviation determination range is expanded in the area where the weeder 402 is in the extended posture. The shape of the field deviation determination ranges C1, C2, and C3 is not limited to a circular shape and may be, for example, a quadrangular shape or another polygonal shape, and even in this case, the field deviation determination ranges C1, C2, and C3 change depending on the type and/or the posture of the attached work machine 400.

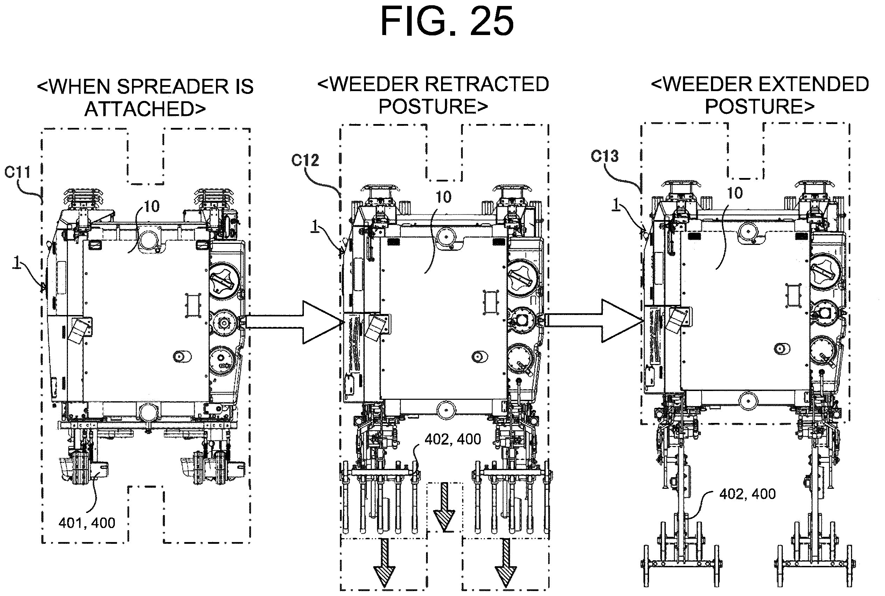

Further, according to the present embodiment, as illustrated in FIG. 25, obstacle determination ranges C11, C12, and C13 different from one another are set at least when the spreader 401 is attached, when the weeder 402 is attached and the weeder 402 is in the retracted posture, and when the weeder 402 is attached and the weeder 402 is in the extended posture. FIG. 25 illustrates, as an example, the obstacle determination ranges C11, C12, and C13 when the machine body 10 performs a spin turn (neutral turn) or moves backward. The obstacle determination ranges C11, C12, and C13 described here are ranges that are set such that, when the obstacle detection device 62 detects an obstacle in the obstacle determination ranges C11, C12, and C13, the work vehicle 1 are caused to perform an action (stopping, decelerating, detouring, or the like) to avoid the contact with the obstacle. That is, when the weeder 402 is attached, the obstacle determination range C12 larger than the obstacle determination range C11 when the spreader 401 is attached is adopted, thereby avoiding the contact of the work machine 400 with the obstacle.

Further, when the weeder 402 is attached, depending on the posture of the weeder 402, the third sensor 625 and the fourth sensor 626 directed to the rear of the machine body 10 may improperly detect the weeder 402. Therefore, in a case where the weeder 402 is attached, the third sensor 625 and the fourth sensor 626 are disabled when the weeder 402 is in the extended posture, and the third sensor 625 and the fourth sensor 626 are enabled only when the weeder 402 is in the retracted posture. Therefore, the obstacle determination range C13 when the weeder 402 is in the extended posture is reduced at the rear of the machine body 10, and even when an obstacle is present at the rear of the machine body 10, the obstacle is not detected, and the process of avoiding the obstacle is not performed.

In short, all the sensors of the obstacle detection device 62 are enabled when the spreader 401 is attached, and conversely, when the weeder 402 is attached, a part of the sensors of the obstacle detection device 62 is switched to be enabled and disabled depending on the posture of the weeder 402.

Further, according to the present embodiment, the maximum vehicle speed during the autonomous travel is set (stored) for each type of the work machine 400, and the change processing unit 76 switches the maximum vehicle speed during the autonomous travel of the work vehicle 1 depending on the type of the attached work machine 400. That is, by previously storing the optimum value of the maximum vehicle speed of the work vehicle 1 in the memory (storage unit) depending on the type of the work machine 400, when the work machine 400 is replaced, the optimum maximum vehicle speed is automatically applied without the operator resetting the maximum vehicle speed.

Depending on the type of the work machine 400, the maximum vehicle speed can be changed by the operation of the operator. For example, since a certain amount of spread is required with respect to the movement distance in the spreading work, it is preferable that the maximum vehicle speed be a certain value during the autonomous travel of the work vehicle 1 when the spreader 401 is attached. Conversely, in the weeding work, since flexible vehicle speed control corresponding to the impossibility of the work is required, it is preferable that the maximum vehicle speed can be changed during the autonomous travel of the work vehicle 1 when the weeder 402 is attached. Therefore, according to the present embodiment, when the weeder 402 is attached, the function of adjusting the maximum vehicle speed is enabled to allow the operator to adjust the maximum vehicle speed. Specifically, the maximum vehicle speed is adjusted in accordance with the operation of the operator on a change screen or the like displayed on the display unit 211 of the first operation terminal 210. The adjusted maximum vehicle speed is held (stored) even when the power of the work vehicle 1 is off and when the adjustment function of the maximum vehicle speed is disabled, and is read out when the power of the work vehicle 1 is turned on or when the adjustment function of the maximum vehicle speed is enabled, thereby eliminating the need for resetting.

As described above, the control method according to the present embodiment includes causing the work vehicle 1 to autonomously travel along the target route R10 and changing the setting item related to the autonomous travel of the work vehicle 1 in accordance with the state of the work machine 400 attached to the work vehicle 1. According to the present embodiment, as described above, the determination processing unit 74 automatically identifies the work machine 400 attached to the work vehicle 1.

With this configuration, when the work machine 400 attached to the work vehicle 1 is replaced with the different work machine 400, for example, it is easy to avoid the operator from performing the work without noticing that the work machine 400 has been replaced. That is, since the setting item related to the autonomous travel of the work vehicle 1 is changed in accordance with the state of the work machine 400 attached to the work vehicle 1, it is possible to cause the work vehicle 1 to autonomously travel in an appropriate manner in accordance with the state of the work machine 400. Specifically, appropriate obstacle determination, field deviation determination, and the like, can be performed, and unnecessary stop control can be suppressed. As a result, there is an advantage that it is easy to perform more appropriate work.

Here, the setting item includes the obstacle determination ranges C11, C12, and C13 in which the process is performed to avoid an obstacle when the obstacle is present around the work vehicle 1. According to the present embodiment, the setting item further includes the field deviation determination ranges C1, C2, and C3. That is, since the obstacle determination ranges C11, C12, C13, and the like, are changed in accordance with the state of the work machine 400 attached to the work vehicle 1, it is possible to avoid performing the process to avoid the obstacle more than necessary.

According to the present embodiment, the state of the work machine 400 includes at least the type of the work machine 400. In short, since the setting item is changed in accordance with the type of the work machine 400 (the spreader 401 or the weeder 402) attached to the work vehicle 1, it is easy to perform the appropriate work corresponding to the type of the work machine 400.

Further, the state of the work machine 400 includes whether the posture of the work machine 400 is either the retracted posture or the extended posture. That is, in a case where the weeder 402 is attached as the work machine 400 to the work vehicle 1, the setting item is changed in accordance with the posture (the retracted posture or the extended posture) of the work machine 400, and therefore, it is easy to perform the appropriate work corresponding to the posture of the work machine 400.

Further, according to the present embodiment, the setting item includes validity or invalidity of obstacle detection around the work vehicle 1. For example, the validity/invalidity of the third sensor 625 and the fourth sensor 626 directed to the rear of the machine body 10 is changed depending on the posture of the weeder 402. Thus, it is easy to perform the appropriate obstacle detection corresponding to the posture of the work machine 400 while avoiding improper detection of an obstacle.

A sensor that detects an obstacle is attachable to the work vehicle 1 in accordance with the type of the work machine 400. For example, the third sensor 625 and the fourth sensor 626 directed to the rear of the machine body 10 are provided at different positions in the work vehicle 1 depending on whether the work machine 400 is the spreader 401 or the weeder 402. In this way, the sensor is provided corresponding to the type of the work machine 400, and thus it is easy to detect an obstacle while avoiding interference with the work machine 400.

Further, the setting item includes the vehicle speed of the work vehicle 1 during the autonomous travel. In short, since the speed (including the maximum vehicle speed) of the work vehicle 1 during autonomous travel is changed in accordance with the type (the spreader 401 or the weeder 402) of the work machine 400 attached to the work vehicle 1, it is easy to perform the appropriate work corresponding to the type of the work machine 400.

Furthermore, the target route R10 includes the work route R1 and the movement route R2, and the vehicle speed of the work vehicle 1 during the autonomous travel is individually set for the work route R1 and the movement route R2. Specifically, the vehicle speed at the time of traveling on the work route R1 is set to, for example, 4 km/h when the spreader 401 is attached, and can be adjusted in the range from 1. 5 km/h to 4 km/h when the weeder 402 is attached. The vehicle speed at the time of traveling on the work route R1 is the maximum vehicle speed during the autonomous travel. Conversely, the vehicle speed at the time of traveling on the movement route R2 is set regardless of the work machine 400. For example, the vehicle speed is set to 1.5 km/h or 1.0 km/h by a turning radius in a turning route of the movement route R2, and the vehicle speed is set to 1.5 km/h in a straight route of the movement route R2. Therefore, the maximum vehicle speed is adjusted to 1.5 km/h when the weeder 402 is attached, and thus the vehicle speed of the work vehicle 1 during the autonomous travel can be set to a common vehicle speed (for example, 1.5 km/h) on the work route R1 and the movement route R2.

In short, the target route R10 includes the work route R1 along which the work vehicle 1 performs work on the work object and the movement route R2 that connects the work routes R1 to each other. When the state of the work machine 400 is the first state (for example, the weeder 402), the setting item (for example, the vehicle speed) common to the work route R1 and the movement route R2 is used. Conversely, when the state of the work machine 400 is the second state (for example, the spreader 401), the setting items (for example, the vehicle speeds) different for the work route R1 and the movement route R2 are used. Thus, the appropriate autonomous travel can be performed in accordance with the state of the work machine 400.

### [3.5] Lifting And Lowering Control of Work Machine

Next, an action of the control system 100 (mainly, the control device 7) related to lifting and lowering control of the work machine 400 in the work vehicle 1 will be described.

The weeder 402 as the work machine 400 is configured to be able to lift and lower between the extended posture and the retracted posture as described above. The lifting and lowering processing unit 79 of the control device 7 automatically lifts and lowers the weeder 402 by controlling the lifting and lowering unit 46 to switch the weeding pattern based on the control information included in the target route R10 while the work vehicle 1 autonomously travels. Further, as the lifting and lowering processing unit 79 individually controls the pair of right and left lifting and lowering units 46, the first work unit (the weeding unit 45 on the left side) located on one side of the work target row (the crop row Vr1) and the second work unit (the weeding unit 45 on the right side) located on the other side of the work target row are individually controllable to be lifted and lowered.

The control method according to the present embodiment includes causing the work vehicle 1 to travel autonomously and controlling lifting and lowering of the work machine 400 (the weeder 402) during the autonomous travel of the work vehicle 1 at the timing determined based on the arrangement of the work target rows (the crop rows Vr1) in the work site (the field F1) and the work content. The lifting and lowering processing unit 79 basically causes the weeder 402 to lift and lower based on the current position of the work vehicle 1 and (the control information included in) the target route R10. In addition to this, the lifting and lowering processing unit 79 determines the timing of controlling lifting and lowering of the weeder 402 based on the arrangement of the crop rows Vr1 and the work content.

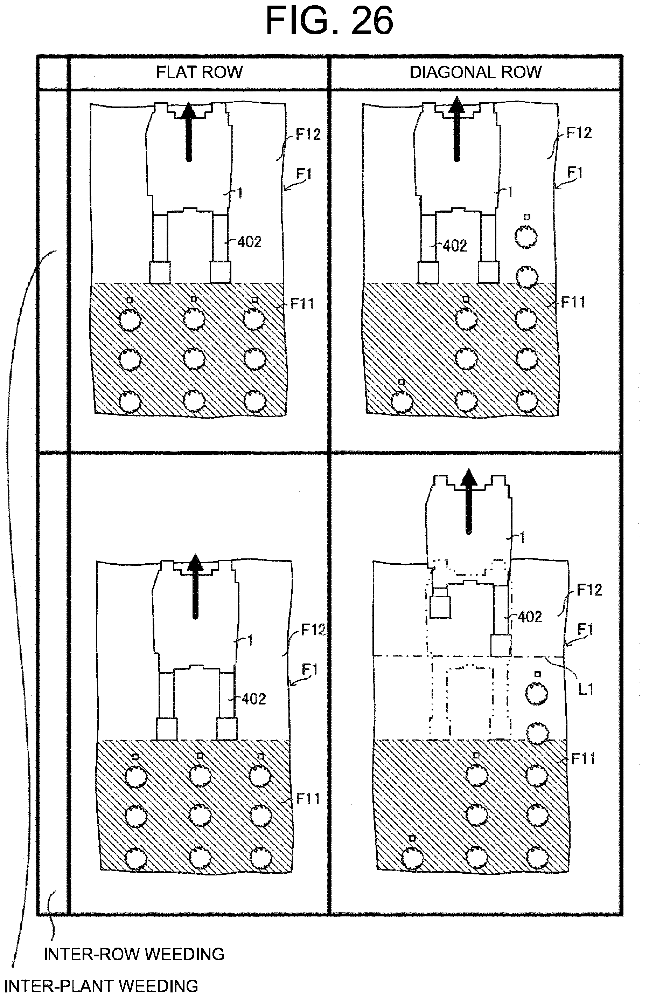

The term "arrangement" described here means, for example, the arrangement of the work target rows (the crop rows Vr1) in the work site (the field F1) and includes, for example, a "flat row" and a "diagonal row" illustrated in FIG. 26. The "flat row" is the arrangement in which end portions of a plurality of work target rows (the crop rows Vr1) are arranged on a virtual line orthogonal to the work target rows (the crop rows Vr1) in a plan view. The "diagonal row" is the arrangement in which the end portions of the plurality of work target rows (the crop rows Vr1) are not arranged on a virtual line orthogonal to the work target rows (the crop rows Vr1) in a plan view, that is, are inclined with respect to the virtual line. The "work content" described here includes the type of work and, for example, in the case of the weeding work, includes "inter-plant weeding", "inter-row weeding", or the like.

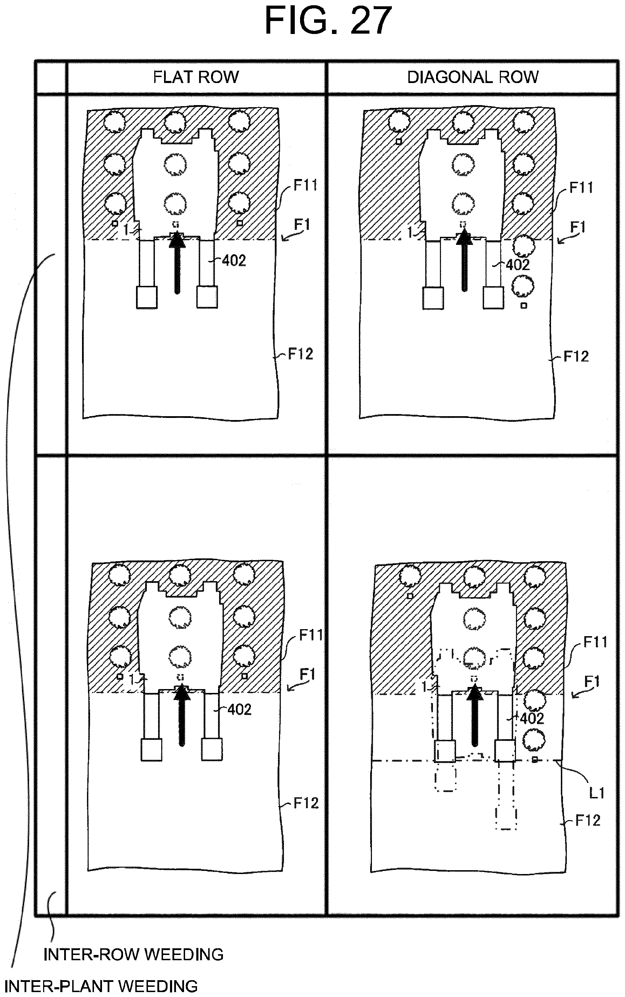

Specifically, the lifting and lowering processing unit 79 controls the lifting and lowering of the weeder 402 at the timings illustrated in FIGS. 26 and 27. FIG. 26 is a schematic plan view schematically illustrating the lifting and lowering control of the weeder 402 when the work vehicle 1 moves from the work area F11 to the non-work area F12. FIG. 27 is a schematic plan view schematically illustrating the lifting and lowering control of the weeder 402 when the work vehicle 1 moves from the non-work area F12 to the work area F11.

First, as illustrated in FIG. 26, in a case where the arrangement of the crop rows Vr1 is a flat row, in both the inter-plant weeding and the inter-row weeding, the lifting and lowering processing unit 79 simultaneously lifts the first work unit (the weeding unit 45 on the left side) and the second work unit (the weeding unit 45 on the right side) when the rear end of the weeder 402 exceeds the boundary between the work area F11 and the non-work area F12. Thus, immediately after the weeder 402 goes out of the work area F11, the pair of weeding units 45 change from the extended posture to the retracted posture.

In a case where the arrangement of the crop rows Vr1 is a diagonal row, the timing at which the lifting and lowering processing unit 79 controls lifting and lowering of the weeder 402 differs between inter-plant weeding and inter-row weeding. In inter-plant weeding, the lifting and lowering processing unit 79 simultaneously lifts the first work unit (the weeding unit 45 on the left side) and the second work unit (the weeding unit 45 on the right side) when the rear end of the weeder 402 reaches the end point of the crop row Vr1 located below the machine body 10. Thus, immediately after the weeder 402 gets away from the crop row Vr1 located below the machine body 10, the pair of weeding units 45 is changed from the extended posture to the retracted posture.

Conversely, in the case of a diagonal row and inter-row weeding, the lifting and lowering processing unit 79 lifts only the first work unit (the weeding unit 45 on the left side) when the rear end of the weeder 402 has passed the end point of the crop row Vr1 located below the machine body 10. Therefore, after the weeder 402 gets away from the crop row Vr1 located below the machine body 10, the work vehicle 1 travels while keeping only the first work unit (the weeding unit 45 on the left side) in the retracted posture and the second work unit (the weeding unit 45 on the right side) in the extended posture for a while. Then, the lifting and lowering processing unit 79 lifts the second work unit (the weeding unit 45 on the right side) when the rear end of the weeder 402 reaches a virtual line L1 where there are no more crop rows Vr1 on the right side of the work vehicle 1. Accordingly, immediately after the weeder 402 comes out of the virtual line L1, the pair of weeding units 45 is both in the retracted posture.

In the example of FIG. 27, in a case where the arrangement of the crop rows Vr1 is a flat row, in both inter-plant weeding and inter-row weeding, the lifting and lowering processing unit 79 simultaneously lowers the first work unit (the weeding unit 45 on the left side) and the second work unit (the weeding unit 45 on the right side) when the front end of the weeder 402 exceeds the boundary between the work area F11 and the non-work area F12. Thus, immediately after the weeder 402 enters the work area F11, the pair of weeding units 45 changes from the retracted posture to the extended posture.

When the arrangement of the crop rows Vr1 is a diagonal row, the timing at which the lifting and lowering processing unit 79 controls lifting and lowering of the weeder 402 differs between inter-plant weeding and inter-row weeding. In the inter-plant weeding, the lifting and lowering processing unit 79 simultaneously lowers the first work unit (the weeding unit 45 on the left side) and the second work unit (the weeding unit 45 on the right side) when the front end of the weeder 402 reaches the start point of the crop row Vr1 located below the machine body 10. Thus, immediately after the weeder 402 reaches the start point of the crop row Vr1 located below the machine body 10, the pair of weeding units 45 changes from the retracted posture to the extended posture.

Conversely, in the case of a diagonal row and inter-row weeding, the lifting and lowering processing unit 79 lowers only the second work unit (the weeding unit 45 on the right side) when the front end of the weeder 402 reaches the start point (the virtual line L1) of the crop row Vr1 on the right side of the work vehicle 1. Therefore, after the weeder 402 reaches the start point of the crop row Vr1 on the right side of the work vehicle 1, the work vehicle 1 travels while keeping only the second work unit (the weeding unit 45 on the right side) in the extended posture and the first work unit (the weeding unit 45 on the left side) in the retracted posture for a while. Then, when the front end of the weeder 402 reaches the start point of the crop row Vr1 located below the machine body 10, the lifting and lowering processing unit 79 lowers the first work unit (the weeding unit 45 on the left side). Accordingly, immediately after reaching the start point of the crop row Vr1 located below the machine body 10, the pair of weeding units 45 is both in the extended posture.

As described above, it is possible to lift and lower the work machine 400 at more appropriate timing by controlling lifting and lowering of the work machine 400 during the autonomous travel of the work vehicle 1 at the timing determined based on the arrangement of the work target rows in the work site and the work content. Therefore, for example, as compared to a case where the operator manually lifts and lowers the work machine 400, the operator easily performs the appropriate work with the work vehicle 1 without misjudging the timing of lifting and lowering the work machine 400. As a result, there is an advantage that it is easy to perform more appropriate work.

In particular, according to the present embodiment, the work vehicle 1 is capable of traveling in a posture straddling the work target row (the crop row Vr1). Therefore, even for the work target row (the crop row Vr1) at a position straddled by the work vehicle 1, it is easy to perform more appropriate work by controlling lifting and lowering of the work machine 400 at the appropriate timing.

Further, as described above, according to the present embodiment, it is determined whether to lift and lower the first work unit and the second work unit at the same timing or at different timings based on the arrangement of the work target rows and the work content. That is, in the case of a diagonal row and inter-row weeding, the first work unit and the second work unit are lifted and lowered at different timings, and in other cases, the first work unit and the second work unit are lifted and lowered at the same timing. Therefore, flexible lifting and lowering control can be performed, and more appropriate work can be easily performed.

In addition, the arrangement of the work target rows (the crop rows Vr1) includes whether the end portions of the plurality of work target rows (the crop rows Vr1) are arranged on the virtual line orthogonal to the work target rows (the crop rows Vr1) in a plan view. That is, the arrangement of the work target rows includes whether it is a flat row or a diagonal row. Therefore, for example, even in a case where a flat row and a diagonal row are mixed due to a restriction such as the landform of the work site (the field F1), the lifting and lowering of the work machine 400 can be controlled at appropriate timing, and an unworked field is unlikely to occur.

Furthermore, according to the present embodiment, the weeder 402 includes the lifting and lowering operating unit 47 for manual operation and enables the lifting and lowering action of the weeder 402 by the operator's manual operation in addition to the lifting and lowering control automatically performed by the lifting and lowering processing unit 79 during the autonomous travel. Here, when the lifting and lowering operating unit 47 is operated during the autonomous travel of the work vehicle 1, the traveling processing unit 72 of the control device 7 stops the autonomous travel.

That is, the traveling processing unit 72 stops the autonomous travel of the work vehicle 1 when the lifting and lowering operating unit 47 is operated, which is installed in the work vehicle 1 to lift and lower the work machine 400. Specifically, the traveling processing unit 72 stops the autonomous travel of the work vehicle 1 and stops the work vehicle 1 on the spot or at a predetermined place. Since it is assumed that the lifting and lowering operating unit 47 is operated while the work machine 400 is visually recognized, the lifting and lowering operating unit 47 is provided in the vicinity of the work machine 400 (in the rear portion of the work vehicle 1). That is, the operator is supposed to be near the work vehicle 1 when the lifting and lowering operating unit 47 is operated, and therefore, by stopping the autonomous travel in such a case, it is possible to avoid the contact between the operator and the work vehicle 1. In this case, in order to prompt the safety check of the surroundings of the work vehicle 1, it is preferable that the autonomous travel is ended instead of the temporary stop and the autonomous travel cannot be resumed until the resumption condition is satisfied again.

Here, the control method according to the present embodiment further includes controlling the work machine 400 to be lifted or lowered to a specific height when resuming the autonomous travel from a state where the autonomous travel of the work vehicle 1 has stopped. That is, while the work vehicle 1 has stopped, the operator may change the height of the work machine 400 by operating the lifting and lowering operating unit 47. In such a case, the work machine 400 is lifted at least to a height suitable for the autonomous travel, and then the autonomous travel is resumed, thereby realizing the appropriate work.

In the control method according to the present embodiment, a notification is made when an abnormality occurs in the automatic lifting and lowering function that automatically lifts and lowers the work machine 400 during the autonomous travel of the work vehicle 1. That is, when the lifting and lowering processing unit 79, which automatically lifts and lowers the work machine 400 during the autonomous travel of the work vehicle 1, cannot lift or lower the work machine 400 due to some abnormality, an error notification is performed. Accordingly, it is possible to prevent the work from being continued in a state where there is a failure in automatic lifting and lowering, and to realize the appropriate work.

Furthermore, in the control method according to the present embodiment, the autonomous travel of the work vehicle 1 is stopped when the automatic lifting and lowering function is abnormal. That is, the traveling processing unit 72 stops the autonomous travel of the work vehicle 1 and stops the work vehicle 1 not only when the lifting and lowering operating unit 47 is operated but also when the automatic lifting and lowering function is abnormal. Accordingly, it is possible to prevent the work from being continued in a state where there is a failure in automatic lifting and lowering, and to realize the appropriate work.

The resumption condition for resuming the autonomous travel from the state where the autonomous travel of the work vehicle 1 has stopped due to the abnormality of the automatic lifting and lowering function includes eliminating the abnormality of the automatic lifting and lowering function. Therefore, when the autonomous travel of the work vehicle 1 has stopped due to the abnormality of the automatic lifting and lowering function, the autonomous travel is not resumed unless the abnormality of the automatic lifting and lowering function is eliminated. Therefore, it is possible to prevent the work from being continued in a state where there is a failure in autonomous lifting and lowering and to realize the appropriate work.

For example, when an abnormality occurs in the automatic lifting and lowering function because the work machine 400 is caught on the ground (soil), a root, or the like, the abnormality can often be eliminated by the operator operating the lifting and lowering operating unit 47 to cause the work machine 400 to perform a lifting and lowering action. When the abnormality is due to a malfunction or the like, the abnormality cannot be eliminated by manual operation of the lifting and lowering operating unit 47, and therefore the autonomous travel of the work vehicle 1 cannot be resumed.

Specifically, when the output (lift angle) of the lift angle sensor of the lifting and lowering unit 46 does not change even though the lifting and lowering processing unit 79 outputs the instruction for lifting and lowering control, for example, it is determined that the automatic lifting and lowering function is abnormal. However, when the lift angle is near the upper limit or the lower limit of the movable range, it is not determined that there is an abnormality even though the output (lift angle) of the lift angle sensor does not change.

Here, the presence or absence of abnormality is individually determined and managed for each of the pair of lifting and lowering units 46. When an operation is performed by the lifting and lowering operating unit 47 on the lifting and lowering unit 46 on the side where the abnormality has occurred and thus the abnormality of the lifting and lowering unit 46 is eliminated, the abnormality of the automatic lifting and lowering function is eliminated.

Further, according to the present embodiment, when the work machine 400 is lifted or lowered, it is preferable to notify the surroundings of the work vehicle 1 by emitting a sound from a sound output unit such as a buzzer or a speaker. Here, it is preferable that the notification during the lifting and lowering action of the work machine 400 is performed by any one of the operation of the lifting and lowering operating unit 47 and the automatic lifting and lowering function of the lifting and lowering processing unit 79.

Further, in a case where the work vehicle 1 starts or resumes the autonomous travel, it is preferable to output the sound from the sound output unit in advance before the work machine 400 starts the lifting and lowering action. At the start or resumption of the autonomous travel, the work machine 400 may suddenly start the lifting and lowering action, and therefore, by issuing a warning before the start of the lifting and lowering action, it is possible to call attention to the surroundings in advance.

### [4] Modification

Modifications of the first embodiment will be listed below. The modifications described below can be appropriately combined and applied.

The control device 7 according to the present disclosure includes a computer system. The computer system includes, as a main component, one or more processors and one or more memories as hardware. The processor executes a program recorded in the memory of the computer system so that the function as the control device 7 according to the present disclosure is implemented. The program may be previously recorded in the memory of the computer system, may be provided through an electric communication line, or may be provided by being recorded in a non-transitory recording medium readable by the computer system, such as a memory card, an optical disk, or a hard disk drive. Further, some or all of the functional units included in the control device 7 may be configured by electronic circuits.

In addition, it is not an essential configuration of the control device 7 that at least a part of the functions of the control device 7 is integrated in one housing, and the constituent elements of the control device 7 may be provided to be distributed in a plurality of housings. Conversely, in the control device 7, the functions distributed to a plurality of devices (for example, the control device 7 and the first operation terminal 210) may be integrated in one housing. Further, at least a part of the functions of the control device 7 may be implemented by a cloud (cloud computing) or the like.

The work vehicle 1 may be used for work in not only an orchard such as a grape orchard or an apple orchard but also the other fields F1 or work sites other than the fields F1. Further, the spread material spread by the work vehicle 1 is not limited to medicinal solution and may be, for example, water, fertilizer, disinfectant, other liquids, or powder. Similarly, the spread object to which the spread material is spread is not limited to grape trees and may be other crops or objects (including inorganic substances) other than crops. Further, the work vehicle 1 is not limited to an unmanned vehicle that acts by autonomous driving, and the work vehicle 1 may be configured to operate by an operation (including a remote operation) of a person (operator) and may be, for example, a riding type (manned vehicle) on which an operator can ride. In this case, too, the antenna 21 and the like are provided in the work vehicle 1 in order to determine the current position of the work vehicle 1.

Further, the support frame 3 may be attached to one end portion of the machine body 10 in the front-back direction D3, or may be attached to the front of the machine body 10. In this case, the work machine 400 supported by the support frame 3 is also provided in not the rear side but the front side of the machine body 10.

Further, the work machine 400 (the spreader 401 or the weeder 402) may be attached to the machine body 10 of the work vehicle 1, and is not necessarily supported by the support frame 3. That is, at least one of the spreader 401 and the weeder 402 may be directly supported by the machine body 10 without using the support frame 3.

In addition, a specific way for notification and presentation is not limited to display on the display unit 211 of the first operation terminal 210, and may be display on another display unit, sound, transmission to an external terminal, other ways, or a combination thereof. For example, the notification processing unit 75 may notify the determination result of a match/mismatch between the first information and the second information performed by the determination processing unit 74 by a sound such as a buzzer.

Furthermore, the identification of (the type of) the work machine 400 attached to the work vehicle 1 is not always performed automatically by the determination processing unit 74, and may be performed in response to an operation of the operator, for example.

Further, the work vehicle 1 may include the pair of work machines 400 arranged side by side in the front-back direction D3. Accordingly, the work vehicle 1 can perform work in each of the pair of work machines 400 arranged side by side in the front-back direction D3, and work performance can be improved as compared to a case where work is performed by only one of the work machines 400. The work vehicle 1 may further include a rotary drive device that generates a rotational force for rotating the support frame 3 about the rotation axis Ax1 with respect to the machine body 10.

Further, it is appropriate as long as the machine body 10 includes the first block 10L and the second block 10R arranged side by side in the right-left direction D2, and the first block 10L and the second block 10R may be reversed in the right-left direction. That is, the first block 10L provided with the power source 63 and the like may be located on the right side, and the second block 10R provided with the user interface 61 and the like may be located on the left side.

In addition, the traveling unit 11 is not limited to a crawler-type traveling device and, for example, may be configured to include one or more wheels and travel by rotation of the wheels. Further, the traveling unit 11 is not always configured to be driven by a hydraulic motor and may be configured to be driven by, for example, an electric motor.

In addition, the spreader 401 as the work machine 400 is not limited to the spreader of an air assist type as in the first embodiment, and may be, for example, a spreader of an electrostatic spreading type or a combination of an air assist type and an electrostatic spreading type.

The power source 63 is not limited to an engine, and may include, for example, a motor (electric motor), or may be a hybrid power source including an engine and a motor.

In addition, the machine body 10 of the work vehicle 1 may not have a gate shape, and the entire machine body 10 may travel in a gap (work path) between the pair of adjacent crop rows Vr1. In this case, the work vehicle 1 travels on each work path without straddling the crop row Vr1. In this case, the spreader 401 performs the spreading work by switching between the spread pattern in which the medicinal solution is spread to both sides in the right-left direction D2, the spread pattern in which the medicinal solution is spread to only the left side, and the spread pattern in which the medicinal solution is spread to only the right side.

### [Appendix of Invention]

An outline of the invention extracted from the above-described embodiment will be described below as appendixes. The configurations and processing functions described in the following appendixes can be selected and arbitrarily combined.

### <Appendix 1>

A method for controlling a work vehicle to which a work machine is detachably attached, the method comprising:
causing the work vehicle to autonomously travel along a target route; and
changing a setting item related to autonomous travel of the work vehicle in accordance with a state of the work machine attached to the work vehicle.

### <Appendix 2>

The method for controlling the work vehicle according to appendix 1, wherein the setting item includes an obstacle determination range in which a process is performed to avoid an obstacle when the obstacle is present around the work vehicle.

### <Appendix 3>

The method for controlling the work vehicle according to appendix 1 or 2, wherein
the target route includes a work route along which the work vehicle performs work on a work object and a movement route that connects the work routes to each other,
when the state of the work machine is a first state, the setting item common to the work route and the movement route is used, and
when the state of the work machine is a second state, the setting items different for the work route and the movement route are used.

### <Appendix 4>

The method for controlling the work vehicle according to any one of appendixes 1 to 3, wherein the state of the work machine includes a type of the work machine.

### <Appendix 5>

The method for controlling the work vehicle according to any one of appendixes 1 to 4, wherein the state of the work machine includes whether a posture of the work machine is either a retracted posture or an extended posture.

### <Appendix 6>

The method for controlling the work vehicle according to any one of appendixes 1 to 5, wherein a sensor that detects an obstacle is attachable to the work vehicle in accordance with a type of the work machine.

### <Appendix 7>

The method for controlling the work vehicle according to any one of appendixes 1 to 6, wherein the setting item includes validity or invalidity of obstacle detection around the work vehicle.

### <Appendix 8>

The method for controlling the work vehicle according to any one of appendixes 1 to 7, wherein the setting item includes a vehicle speed of the work vehicle during autonomous travel.

### <Appendix 9>

A work vehicle control program causing one or more processors to execute the method for controlling the work vehicle according to any one of appendixes 1 to 8.

### REFERENCE SIGNS LIST

1 WORK VEHICLE
10 MACHINE BODY
72 TRAVELING PROCESSING UNIT
76 CHANGE PROCESSING UNIT
100 WORK VEHICLE CONTROL SYSTEM
400 WORK MACHINE
621 FIRST DETECTION UNIT (SENSOR)
622 SECOND DETECTION UNIT (SENSOR)
623 TO 626 FIRST SENSOR TO FOURTH SENSOR
627 FRONT CONTACT SENSOR
628 REAR CONTACT SENSOR
C11, C12, C13 OBSTACLE DETERMINATION RANGE
R10 TARGET ROUTE
R11 WORK ROUTE
R12 MOVEMENT ROUTE

## Claims

1. A method for controlling a work vehicle to which a work machine is detachably attached, the method comprising:
causing the work vehicle to autonomously travel along a target route; and
changing a setting item related to autonomous travel of the work vehicle in accordance with a state of the work machine attached to the work vehicle.

2. The method for controlling the work vehicle according to claim 1, wherein the setting item includes an obstacle determination range in which a process is performed to avoid an obstacle when the obstacle is present around the work vehicle.

3. The method for controlling the work vehicle according to claim 1 or 2, wherein
the target route includes a work route along which the work vehicle performs work on a work object and a movement route that connects the work routes to each other,
when the state of the work machine is a first state, the setting item common to the work route and the movement route is used, and
when the state of the work machine is a second state, the setting items different for the work route and the movement route are used.

4. The method for controlling the work vehicle according to claim 1 or 2, wherein the state of the work machine includes a type of the work machine.

5. The method for controlling the work vehicle according to claim 1 or 2, wherein the state of the work machine includes whether a posture of the work machine is either a retracted posture or an extended posture.

6. The method for controlling the work vehicle according to claim 1 or 2, wherein a sensor that detects an obstacle is attachable to the work vehicle in accordance with a type of the work machine.

7. The method for controlling the work vehicle according to claim 1 or 2, wherein the setting item includes validity or invalidity of obstacle detection around the work vehicle.

8. The method for controlling the work vehicle according to claim 1 or 2, wherein the setting item includes a vehicle speed of the work vehicle during autonomous travel.

9. A work vehicle control program causing one or more processors to execute the method for controlling the work vehicle according to claim 1 or 2.

10. A work vehicle control system used for controlling a work vehicle to which a work machine is detachably attached, the work vehicle control system comprising:
a traveling processing unit that causes the work vehicle to autonomously travel along a target route; and
a change processing unit that changes a setting item related to autonomous travel of the work vehicle in accordance with a state of the work machine attached to the work vehicle.

11. A work vehicle comprising:
the work vehicle control system according to claim 10; and
a machine body to which the work machine is detachably attached.
